# EUROPÄISCHE PATENTSCHRIFT

(11) **EP 0 829 172 B1**
(45) Veröffentlichungstag und Bekanntmachung des Hinweises auf die Patenterteilung: **22.09.1999**
(21) Anmeldenummer: 96919599.9
(22) Anmeldetag: 29.05.1996
(51) Int. Cl.: H04Q 7/24, H04Q 7/30, H04B 7/26, H04J 3/06

(54) **ZELLULARES SCHNURLOS-TELEKOMMUNIKATIONSSYSTEM MIT ISDN-ANSCHLUSS**
CELLULAR CORDLESS TELECOMMUNICATION SYSTEM WITH ISDN CONNECTION
SYSTEME DE TELECOMMUNICATION CELLULAIRE SANS FIL AVEC RACCORDEMENT RNIS

(30) Priorität: 31.05.1995 DE 19519966
(43) Veröffentlichungstag der Anmeldung: 18.03.1998
(73) Patentinhaber: SIEMENS AKTIENGESELLSCHAFT, 80333 München (DE)
(72) Erfinder: PAULI, Burkhard, D-46284 Dorsten (DE); NEUHAUS, Ralf, D-44534 Lünen (DE); IDE, Hans-Dieter, D-44287 Dortmund (DE); FLAKE, Horst, D-82041 Oberhaching (DE); WEWERS, Otger, D-46395 Bocholt (DE)
(86) Internationale Anmeldenummer: DE9600933
(87) Internationale Veröffentlichungsnummer: WO9638990

(56) Entgegenhaltungen:
- EP-A- 0 529 359
- EP-A- 0 624 995
- WO-A-94/18764
- US-A- 5 309 440
- US-A- 5 327 433
- US-A- 5 388 102
- US-A- 5 398 249

## Beschreibung

Die Erfindung bezieht sich auf ein zellulares Schnurlos-Telekommunikationssystem gemäß dem Oberbegriff der Patentansprüche 1 bis 3.

Das gegenwärtig leistungsfähigste Schnurlos-Telekommunikationssystem basiert auf dem DECT-Standard (**D**igital **E**nhanced (früher: **E**uropean) **C**ordless **T**elecommunications; vgl. **(1)**: Nachrichtentechnik Elektronik 42 (Jan./Feb. 1992), No.1, Berlin; U. Pilger: "Struktur des DECT-Standards"; Seiten 23 bis 29 **in Verbindung mit** der ETSI-Publikation ETS 300175-1...9, Oktober 1992; **(2)**: Siemens Components 31 (1993), No. 6; S. Althammer und D. Brückmann: "Hochoptimierte IC's für DECT-Schnurlostelefone", Seiten 215 bis 218; **(3)**: telcom report 16 (1993), No. 1, J.H. Koch: "Digitaler Komfort für schnurlose Telekommunikation - DECT-Standard eröffnet neue Nutzungssgebiete", Seiten 26 und 27), das Funknachrichten u. a. nach dem TDMA-Verfahren (**T**ime **D**ivision **M**ultiple **A**ccess) überträgt.

Die vorliegende Erfindung ist jedoch nicht auf das TDMA-Übertragungsverfahren beschränkt. So erstreckt sich die Erfindung auch auf solche Systeme, die in der Druckschrift TIB-RO9067(5)-P. Bauer-Trocheris: "UMTS-Integrator für die mobile Kommunikation - ein Ausblick auf die Mobilfunklandschaft nach dem Jahr 2000", Bericht über die Tagung "Europäischer Mobilfunk, 5. Jahrestreffen der deutschen und europäischen Mobilfunkbranche, FIBA Kongresse, München 24. bis 26. Feb. 1993" aufgeführt sind.

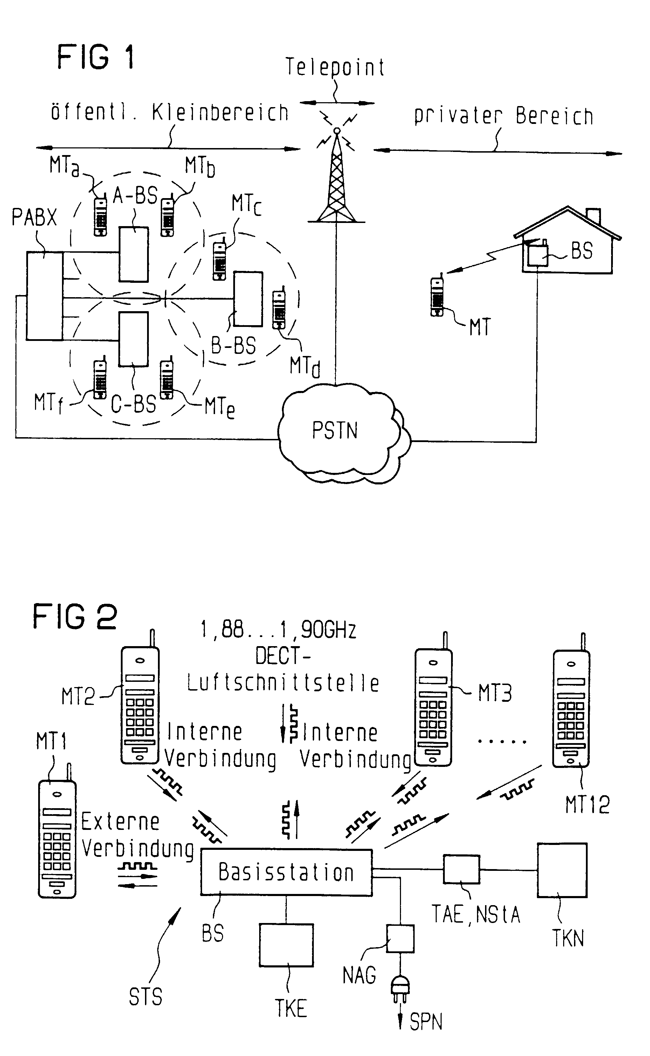

Das DECT-spezifische Schnurlos-Telefonsystem ist ein digitales System, das gemäß Figur 1 (vgl. tec 2/93 - Das technische Magazin von Ascom "Wege zur universellen mobilen Telekommunikation", Seiten 35 bis 42) im privaten Bereich (z. B. Haus, Wohnung, Garten etc.) im öffentlichen Kleinbereich (z. B. Firmen, Bürohäuser etc.) und als Telepoint-Anwendung eingesetzt werden kann.

Das Schnurlos-Telefonsystem besteht in seiner Grundstruktur aus einer Basisstation BS (FP= **F**ixed **P**art mit FT= **F**ixed **T**ermination) und einem mit der Basisstation BS telekommunikationsfähigen Mobilteil MT (PP= **P**ortable **P**art mit PT= **P**ortable **T**ermination). Diese Grundstruktur kann gemäß dem DECT-Standard derart erweitert werden, daß bis zu zwölf solcher Mobilteile MT einer einzigen Basisstation BS zugeordnet werden.

FIGUR 2 zeigt ein solches Schnurlos-Telefonsystem STS, bei dem an einer DECT-Basisstation BS über eine für den Frequenzbereich zwischen 1,88 und 1,90 GHz ausgelegte DECT-Luftschnittstelle maximal 12 Verbindungen nach dem TDMA/FDMA/TDD-Verfahren (**T**ime **D**ivision **M**ultiple **A**ccess/**F**requency **D**ivision **M**ultiple **A**ccess/**T**ime **D**ivision **D**uplex) parallel zu DECT-Mobilteilen MT1...MT12 aufgebaut werden. Die Zahl 12 ergibt sich aus einer Anzahl "k" von für den Duplex-betrieb eines DECT-Systems zur Verfügung stehenden Zeitschlitzen bzw. Telekommunikationskanälen (k = 12). Die Verbindungen können dabei intern und/oder extern sein. Bei einer internen Verbindung können zwei an der Basisstation BS registrierte Mobilteile, z. B. das Mobilteil MT2 und das Mobilteil MT3, miteinander kommunizieren. Für den Aufbau einer externen Verbindung ist die Basisstation BS mit einem Telekommunikationsnetz TKN, z.B. in leitungsgebundener Form über eine Telekommunikationsanschlußeinheit TAE bzw. eine Nebenstellenanlage NStA mit einem leitungsgebundenen Telekommunikationsnetz oder gemäß der WO 95/05040 in drahtloser Form als Repeaterstation mit einem übergeordneten Telekommunikationsnetz, verbunden. Bei der externen Verbindung kann man mit einem Mobilteil, z. B. mit dem Mobilteil MT1, über die Basisstation BS, die Telekommunikationsanschlußeinheit TAE bzw. Nebenstellenanlage NStA mit einem Teilnehmer in dem Telekommunikationsnetz TKN kommunizieren. Besitzt die Basisstation BS - wie im Fall des Gigaset 951 (Siemens Schnurlostelefon, vgl. telcom Report 16, (1993) Heft 1, Seiten 26 und 27 - nur einen Anschluß zu der Telekommunikationsanschlußeinheit TAE bzw. der Nebenstellenanlage NStA, so kann nur eine externe Verbindung aufgebaut werden. Hat die Basisstation BS - wie im Fall des Gigaset 952 (Siemens Schnurlostelefon; vgl. telcom Report 16, (1993), Heft 1, Seiten 26 und 27) - zwei Anschlüsse zu dem Telekommunikationsnetz TKN, so ist zusätzlich zu der externen Verbindung mit dem Mobilteil MT1 eine weitere externe Verbindung von einem an die Basisstation BS angeschlossenen leitungsgebundenen Telekommunikationsendgerät TKE möglich. Dabei ist es prinzipiell auch vorstellbar, daß ein zweites Mobilteil, z. B. das Mobilteil MT12, anstelle des Telekommunikationsendgerätes TKE den zweiten Anschluß für eine externe Verbindung nutzt. Während die Mobilteile MT1...MT12 mit einer Batterie oder einem Akkumulator betrieben werden, ist die als schnurlose Klein-Vermittlungsanlage ausgebildete Basisstation BS über ein Netzanschlußgerät NAG an ein Spannungsnetz SPN angeschlossen.

Das Schnurlos-Telefonsystem nach FIGUR 2 wird vorzugsweise in dem privaten Bereich gemäß FIGUR 1 eingesetzt.

Im öffentlichen Kleinbereich - gemäß FIGUR 1 - können mehrere solcher Schnurlos-Telefonsysteme nach FIGUR 2 als ein zellulares System an einer Nebenstellenanlage PABX (**P**rivat **A**utomatic **B**ranch **E**Xchange) betrieben werden, wobei die Nebenstellenanlage PABX mehrere Basisstationen A-BS, B-BS, C-BS steuert und gegebenenfalls ein Handover von einer Basisstation zu einer anderen unterstützt. In FIGUR 1 sind weiterhin sechs Mobilteile MTₐ...MT_{f} dargestellt, die den drei Basisstationen A-BS, B-BS, C-BS zugeordnet sind. Auf diese Weise ist ein zellulares Schnurlos-Telefonsystem entstanden, bei der die Telekommunikationsverbindung in der Regel über diejenige Basisstation A-BS, B-BS, C-BS geführt wird, zu dem das Mobilteil MTₐ...MT_{f} den besten Funkkontakt unterhält.

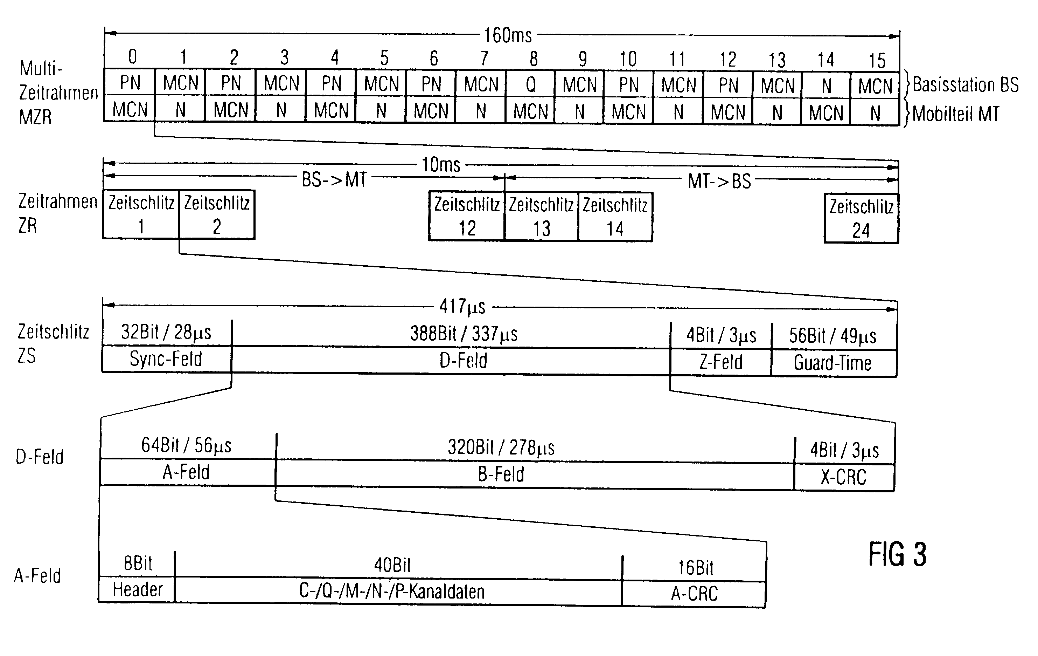

FIGUR 3 zeigt in Anlehnung an die Druckschrift "Nachrichtentechnik Elektronik 42 (1992) Jan./Feb., Nr. 1, Berlin, DE; U. Pilger: "Struktur des DECT-Standards", Seiten 23 bis 29 in Verbindung mit ETS 300 175-1...9, Oktober 1992" die TDMA-Struktur des DECT-Systems STS. Das DECT-System ist ein bezüglich der Vielfachzugriffsverfahren hybrides System, bei dem nach dem FDMA-Prinzip auf zehn Frequenzen im Frequenzband zwischen 1,88 und 1,90 GHz Funknachrichten nach dem TDMA-Prinzip gemäß FIGUR 3 in einer vorgegebenen zeitlichen Abfolge von der Basisstation BS zum Mobilteil MT und vom Mobilteil MT zur Basisstation BS (Duplex-Betrieb) gesendet werden können. Die zeitliche Abfolge wird dabei von einem Multi-Zeitrahmen MZR bestimmt, der alle 160 ms auftritt und der 16 Zeitrahmen ZR mit jeweils einer Zeitdauer von 10 ms aufweist. In diesen Zeitrahmen ZR werden nach Basisstation BS und Mobilteil MT getrennt Informationen übertragen, die einen im DECT-Standard definierten C-,M-,N-,P-,Q-Kanal betreffen. Werden in einem Zeitrahmen ZR Informationen für mehrere dieser Kanäle übertragen, so erfolgt die Übertragung nach einer Prioritätenliste mit M > C > N und P > N. Jeder der 16 Zeitrahmen ZR des Multi-Zeitrahmens MZR unterteilt sich wiederum in 24 Zeitschlitze ZS mit jeweils einer Zeitdauer von 417 µs, von denen 12 Zeitschlitze ZS (Zeitschlitze 0 ... 11) für die Übertragungsrichtung "Basisstation BS → Mobilteil MT" und weitere 12 Zeitschlitze ZS (Zeitschlitze 12 ... 23) für die Übertragungsrichtung ,,Mobilteil MT → Basisstation BS" bestimmt sind. In jedem dieser Zeitschlitze ZS werden nach dem DECT-Standard Informationen mit einer Bitlänge von 480 Bit übertragen. Von diesen 480 Bit werden 32 Bit als Synchronisationsinformation in einem SYNC-Feld und 388 Bit als Nutzinformation in einem D-Feld übertragen. Die restlichen 60 Bit werden als Zusatzinformationen in einem Z-Feld und als Schutzinformationen in einem Feld "Guard-Time" übertragen. Die als Nutzinformationen übertragenen 388 Bit des D-Feldes unterteilen sich wiederum in ein 64 Bit langes A-Feld, ein 320 Bit langes B-Feld und ein 4 Bit langes "X-CRC"-Wort. Das 64 Bit lange A-Feld setzt sich aus einem 8 Bit langen Datenkopf (Header), einem 40 Bit langen Datensatz mit Daten für die C-,Q-,M-,N-,P-Kanäle und einem 16 Bit langen "A-CRC"-Wort zusammen.

FIGUR 4 zeigt ausgehend von der Druckschrift Siemens Components 31 (1993), Heft 6, Seiten 215 bis 218; S. Althammer, D. Brückmann: "Hochoptimierte IC's für DECT-Schnurlostelefone" den prinzipiellen Schaltungsaufbau der Basisstation BS und des Mobilteils MT. Die Basisstation BS und das Mobilteil MT weisen danach ein Funkteil FKT mit einer zum Senden und Empfangen von Funksignalen zugeordneten Antenne ANT, eine Signalverarbeitungseinrichtung SVE und eine Zentrale Steuerung ZST auf, die in der dargestellten Weise miteinander verbunden sind. In dem Funkteil FKT sind im wesentlichen die bekannten Einrichtungen wie Sender SE, Empfänger EM und Synthesizer SYN sowie eine Feldstärkemeßeinrichtung RSSI (**R**adio **S**ignal **S**trength **I**ndicator) enthalten, die in bekannter Weise miteinander verbunden sind. In der Signalverarbeitungseinrichtung SVE ist u.a. eine Kodier-/Dekodiereinrichtung CODEC enthalten. Die Zentrale Steuerung ZST weist sowohl für die Basisstation BS als für das Mobilteil MT einen Mikroprozessor µP mit einem nach dem OSI/ISO-Schichtenmodell (vgl. **(1)**: Unterrichtsblätter - Deutsche Telekom Jg. 48, 2/1995, Seiten 102 bis 11; **(2)**: ETSI-Publikation ETS 300175-1...9, Oktober 1992) aufgebauten Programmodul PGM, einen Signalsteuerungsteil SST und einen Digitalen Signalprozessor DSP auf, die in der dargestellten Weise miteinander verbunden sind. Von den im Schichtenmodell definierten Schichten sind nur die unmittelbar für die Basisstation BS und das Mobilteil MT wesentlichen ersten vier Schichten dargestellt. Das Signalsteuerungsteil SST ist in der Basisstation BS als **T**ime **S**witch **C**ontroller TSC und in dem Mobilteil MT als **B**urst **M**ode **C**ontroller BMC ausgebildet. Der wesentliche Unterschied zwischen den beiden Signalsteuerungsteilen TSC, BMC besteht darin, daß der basisstationsspezifische Signalsteuerungsteil TSC gegenüber dem mobilteilspezifischen Signalsteuerungsteil BMC zusätzlich Vermittlungsfunktionen (Switch-Funktionen) übernimmt. Die Signalsteuerungsteile TSC, BMC enthalten jeweils eine Zähleinrichtung ZE mit einem Bit-, Zeitschlitz- und Zeitrahmenzähler.

Die prinzipielle Funktionsweise der vorstehend aufgeführten Schaltungseinheiten ist beispielsweise in der vorstehend zitierten Druckschrift Siemens Components 31 (1993), Heft 6, Seiten 215 bis 218 beschrieben.

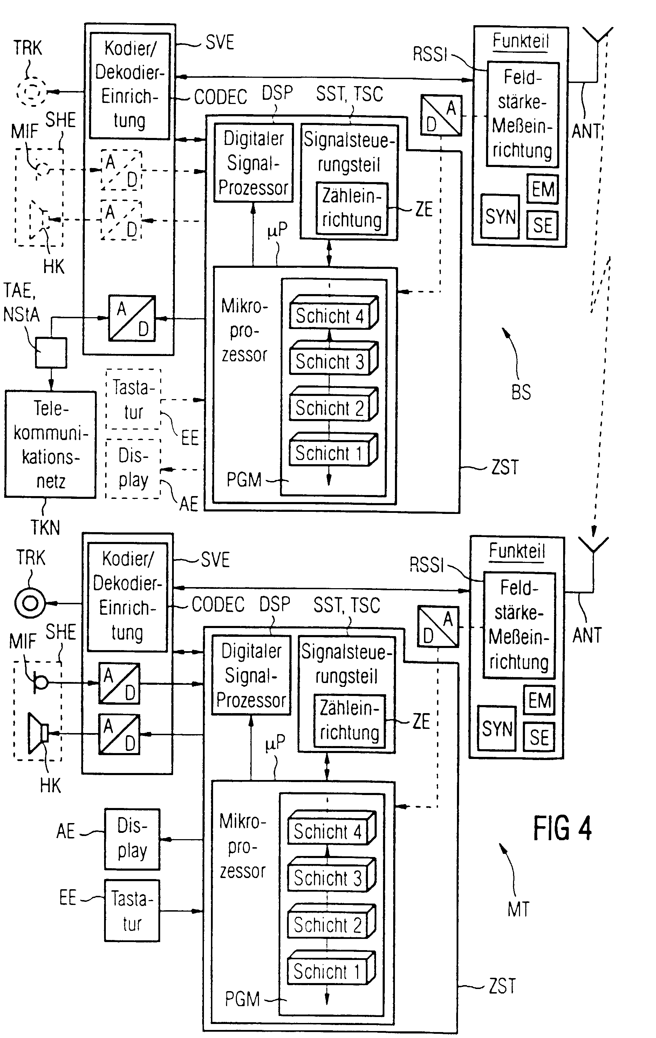

Der beschriebene Schaltungsaufbau nach FIGUR 4 wird bei der Basisstation BS und dem Mobilteil MT gemäß deren Funktion in dem DECT-System nach FIGUR 2 durch zusätzliche Funktionseinheiten ergänzt.

Die Basisstation BS ist über die Signalverarbeitungseinrichtung SVE und der Telekommunikationsanschlußeinheit TAE bzw. der Nebenstellenanlage NStA mit dem Telekommunikationsnetz TKN verbunden. Als Option kann die Basisstation BS noch eine Bedienoberfläche aufweisen (in FIGUR 4 gestrichelt eingezeichnete Funktionseinheiten), die z.B. aus einer als Tastatur ausgebildeten Eingabeeinrichtung EE, einer als Display ausgebildeten Anzeigeeinrichtung AE, einer als Handapparat mit Mikrofon MIF und Hörkapsel HK ausgebildeten Sprech/Höreinrichtung SHE sowie einer Tonrufklingel TRK betsteht.

Das Mobilteil MT weist die bei der Basisstation BS als Option mögliche Bedienoberfläche mit den zu dieser Bedienoberfläche gehörenden vorstehend beschriebenen Bedienelementen auf.

Die Nebenstellenanlage PABX gemäß FIGUR 1 ist wie die Basisstation BS im privaten Bereich mit dem leitungsgebundenen öffentlichen Telefonnetz PSTN (**P**ublic **S**witched **T**elephone **N**etwork) verbunden. Auf diese Weise kann jedermann durch die Anschaffung einer Schnurlos-Telekommunikationsanlage, bestehend aus der Nebenstellenanlage PABX und den an dieser angeschlossenen Schnurlos-Telefonen A-BS, B-BS, C-BS, MTₐ...MT_{f} zu seinem eigenen Netzbetreiber werden.

Aus der EP-0466736 B1 ist ein Schnurlos-Telefonsystem mit einer Nebenstellenanlage bekannt, bei dem für den Aufbau eines zellularen Schnurlos-Telekommunikationssystems Leistungsmerkmale der Nebenstellenanlage ausgenutzt werden.

Um auf eine Netz-Koordination von Schnurlostelefonen nach Figur 1 verzichten zu können, ist gemäß dem DECT-Standard das **D**ynamic **C**hannel **A**llocation-Verfahren (DCA-Verfahren) vorgesehen. Wenn z. B. eine DECT-Verbindung aufgebaut wird, wird diejenige Frequenz und dasjenige Zeitfenster mit der geringsten Interferenz gesucht. Die Höhe (Stärke) der Interferenz hängt vorrangig davon ab, ob
(a) bereits an einer anderen Basisstation ein Gespräch geführt wird oder
(b) ein Mobilteil durch Bewegung in Sichtkontakt mit einer zuvor abgeschatteten Basisstation kommt.

Eine sich hieraus ergebende Erhöhung der Interferenz kann mit dem DECT-Schnurlostelefonsystem zugrundegelegten TDMA-Übertragungsverfahren begegnet werden. Nach dem TDMA-Verfahren wird lediglich ein Zeitschlitz für die eigentliche Übertragung gebraucht; die übrigen elf Zeitschlitze können für Messungen verwendet werden. Dadurch kann ein alternatives Frequenz/Zeitschlitzpaar ermittelt werden, auf das die Verbindung umgeschaltet werden kann. Dies geschieht im Rahmen einer adaptiven Kanalzuweisung gemäß dem DECT-Standard (vgl. Nachrichtentechnik Elektronik 42 (Jan./Feb. 1992), No. 1, Berlin; U. Pilger: "Struktur des DECT-Standards"; Seite 28, Punkt 3.2.6) durch ein "Connection-Handover" (Intra-Cell Handover).

Neben diesem "Intra-Cell Handover" ist noch das "Inter-Cell Handover" bzw. das seamless Handover zu nennen, das ebenfalls im Rahmen der DECT-spezifischen adaptiven Kanalzuweisung möglich ist.

Um nun insbesondere das bei zellularen drahtlosen Telekommunikationssystemen regelmäßig auftretende "Inter-Cell Hand-over"-Problem in den Griff zu bekommen, muß das für solche zellularen Funk-Telekommunikationssysteme vorgesehene mobile Funkempfangsgerät (Mobilteil) zu jedem Zeitpunkt einer aktiven Telekommunikationsverbindung zu einem (quasi)stationären Funksendegerät (Basisstation) in der Lage sein, bedingt durch einen Zellenwechsel innerhalb des zellularen Funksystems die Basisstation zu wechseln (Aufbau einer Telekommunikationsverbindung zu einer anderen Basisstation) und dabei die bereits bestehende aktive Telekommunikationsverbindung unterbrechungsfrei (seamless) an die andere Basisstation weiterzureichen (seamless Handover).

Der DECT-Standard sieht hierfür gemäß der Druckschrift Nachrichtentechnik Elektronik 42 (Jan./Feb. 1992), No. 1, Berlin; U. Pilger: "Struktur des DECT-Standards"; Seite 28, Punkt 3.2.6 vor, daß das Mobilteil selbständig bei einer Verschlechterung der Übertragungsqualität der bestehenden Telekommunikationsverbindung aufgrund von die Übertragungsqualität angebenden Indikatoren (z. B. Signalfeldstärke, CRC-Werte etc.) parallel zu der bestehenden Verbindung eine zweite Telekommunikationsverbindung aufbaut. Bei dieser "Inter-Cell Handover"-Prozedur wird die Tatsache, daß DECT-Mobilteile im Rahmen der dynamischen, dezentralisierten Kanalzuweisung (DCA-Verfahren) ständig über den Status der in der momentanen Umgebung verfügbaren Kanäle informiert sind, derart ausgenutzt, daß die zweite Verbindung aufgrund des Eintrages in eine Kanalliste aufgebaut wird.

Ein unterbrechungsfreies Handover ist mit der vorstehenden Prozedur nur dann möglich, wenn das Mobilteil sich in einem zellularen Funksystem mit synchronisierten Basisstationen befindet. In einem solchen synchronen zellularen Funksystem kann das Mobilteil dann zusätzlich zu der bereits bestehenden Telekommunikationsverbindung zu einer Basisstation (Ursprungs-Basisstation) mindestens eine weitere Verbindung zu einer anderen Basisstation in einer anderen Funkzelle aufbauen, ohne dabei die Synchronität zur Ursprungs-Basisstation zu verlieren. Ein solches synchrones zellulares Funksystem kann aber nur mit erheblichem Systemaufwand (Kabel- oder Funksynchronisation) realisiert werden.

Aus der US-5,388,102 ist eine Anordnung zum Synchronisieren einer Vielzahl von Basisstationen eines drahtlosen Telekommunikationssystems bekannt, die über ISDN-Basisanschlüsse an eine Vermittlungseinrichtung angeschlossen sind. Im Hinblick auf die Handover-Problematik in drahtlosen Telekommunikationssystemen ist es zweckmäßig, wenn die in dem Telekommunikationssystem angeordneten Basisstationen untereinander synchronisiert sind. Zur Synchronisierung der Basisstationen wird deshalb ein Synchronisationssignal (Synchronisiernachricht) von der Vermittlungseinrichtung an die einzelnen Basisstationen im Rahmen eines zwischen der Vermittlungseinrichtung und den Basisstationen ablaufenden Kommunikationsprotokolls übertragen. Für den in der bekannten Anordnung verwendeten ISDN-Basisanschluß als Übertragungsmedium zwischen der Vermittlungseinrichtung und den Basisstationen wird beispielsweise das S- oder M-Bit der ISDN-Datenstruktur als Träger des Synchronisationssignals benutzt.

Aus der EP-0 529 359 A2 ist eine Nebenstellenanlage mit integriertem Mobilteil bekannt, mit der über Basisstationen bedienbare, schnurlose Endgeräte gesteuert werden können. Die Nebenstellenanlage weist hierzu frei konfigurierbare Schnittstellenmodule auf. Zur Steuerung ist eine Zentralsteuereinheit für alle Vermittlungs- und Leistungsmerkmalsteuerungsaufgaben und eine untergeordnete Steuereinheit zur Verbindungsaufbau-/abbausteuerung der schnurlosen Endgeräte vorgesehen. Die Steuereinheiten und die Schnittstellenmodule sind über ein BUS-System miteinander verbunden. Mit der bekannten Nebenstellenanlage ist es ferner möglich, daß jedes schnurlose Endgerät überall innerhalb der Funkreichweite der Basisstationen erreichbar ist und daß bei einem Funkbereichswechsel des schnurlosen Endgerätes von einer Basisstation zu einer anderen Basisstation die bestehende Verbindung, gesteuert durch die untergeordnete Steuereinheit, weitergereicht werden kann.

Die der Erfindung zugrundeliegende Aufgabe besteht darin, ein zellulares Schnurlos-Telekommunikationssystem aufzubauen, das die Realisierung einer Vielzahl von Leistungsmerkmalen, z. B. Synchronisierung, Roaming, Handover, Internverbindungen, Halten, Rückfrage, Übergabe etc., des zellularen Schnurlos-Telekommunikationssystems ohne eine zusätzliche Drahtverbindung zwischen den Schnurlos-Basisstationen des zellularen Schnurlos-Telekommunikationssystems ermöglicht.

Diese Aufgabe wird ausgehend von dem in dem Oberbegriff der Patentansprüche 1 bis 3 definierten zellularen Schnurlos-Telekommunikationssystems durch die kennzeichnenden Merkmale der Patentansprüche 1 bis 3 gelöst.

Vorteilhafte Weiterbildungen der Erfindung sind in den Unteransprüchen angegeben.

Ein erstes Ausführungsbeispiel zur Realisierung des "Handover" und weiterer Leistungsmerkmale, wie Roamimg, Halten, Rückfragen etc., wird ausgehend von FIGUR 1 anhand der FIGUREN 5 und 6 erläutert.

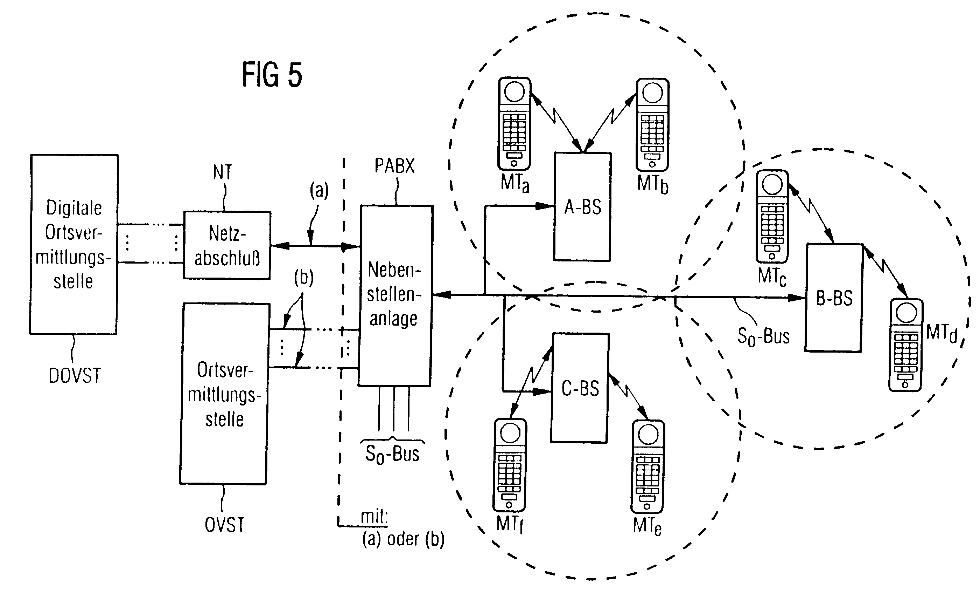

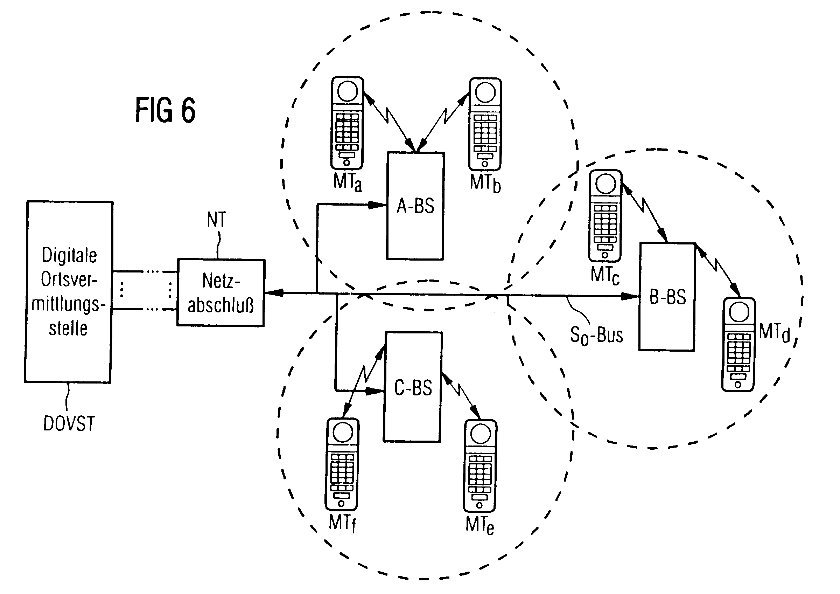

Die Benutzung von digitalen Schnurlos-Endgeräten in Form einer einfachen Mehrzellenlösung kann gemäß der Darstellung in den FIGUREN 5 und 6 vorgenommen werden.

FIGUR 5 zeigt den Anschluß der Schnurlos-Basisstationen über
(a) die Nebenstellenanlage PABX (z.B. eine HICOM-Nebenstellenanlage) mit mehreren S₀-Busanschlüssen und einen Netzabschluß NT (**N**etwork **T**ermination) an eine Digitale Ortsvermittlungsstelle DOVST.
(b) die Nebenstellenanlage PABX (z.B. eine HICOM-Nebenstellenanlage) mit mehreren S₀-Busanschlüssen an eine Digitale Ortsvermittlungsstelle DOVST.

FIGUR 6 zeigt den Anschluß der Schnurlos-Basisstationen über einen Netzabschluß NT (**N**etwork **T**ermination) an eine Digitale Ortsvermittlungsstelle DOVST.

An jeden S₀-Bus können bis zu acht Schnurlos-Basisstationen angeschlossen werden, die innerhalb des abzudeckenden Funkbereichs unter Berücksichtigung der Reichweite des S₀-Bus (ca. 150 m) zur Erreichung einer Flächendeckung möglichst günstig verteilt werden.

Im Euro-ISDN-Standard (vgl. Nachrichtentechnik Elektronik, Berlin, 44(1994) Heft 1, Seiten 16 bis 18) ist es allgemein - bei einem S₀-Busanschluß über die MSN (**M**ultiple **S**ubscriber **N**umber) - möglich, den an einen S₀-Bus angeschlossenen Endgeräten unterschiedliche Rufnummern zuzuteilen. Diese Rufnummern für die einzelnen Geräte können sowohl komplett voneinander verschieden sein als auch nur die n-letzten Stellen der Rufnummer umfassen, wobei n ≥ 1 sein kann. Hierbei ist es möglich, einem Endgerät auch mehrere Mehrfachnummern (MNS) zuzuteilen. Jede angeschlossene Basisstation kann über mehrere bzw. alle vorhandenen Mehrfachnummern (MNS) erreicht werden. An jeder Basisstation sind zudem alle Endgerätekennungen TEI (**T**erminal **E**ndpoint **I**dentifier) der Mobilteile durch einmalige Anmeldung aller Mobilteile bekannt und den verschiedenen Mehrfachnummern eindeutig zugeordnet.

Zur Zeit ist die Anzahl der möglichen Mehrfachrufnummern bei der DBP Telekom zunächst auf m = 10 (NDL m = 8) beschränkt. Beim Anschluß an der Hicom-Nebenstellenanlage (PABX) sind die Mobilteile über die Durchwahlnummer des S₀-Bus und eine daran angehängte einstellige Pseudo-MSN erreichbar, wobei nur diese letzte Ziffer an den Bus gegeben und dort ausgewertet wird. Dabei ist die "0" im allgemeinen für die Anwahl aller angeschlossenen Endgeräte reserviert und die Ziffern "1" bis "8" für die einzelnen Endgeräte. Bei Anlagenanschluß mit mehr als einem S₀-Bus wäre auch ein größerer Wert für m denkbar (z. B. 2-stellig), da nur die Basisstationen die MSN auswerten. In diesem Fall müßte sichergestellt sein, daß die Basisstationen auf die Gesamtzahl der vergebenen MSN`s einstellbar sind.

### Roaming

Eine mobile Endstelle (Schnurlos-Teilnehmer) kann sich innerhalb des durch Funkzellen abgedeckten Netzes frei bewegen und sowohl Verbindungen aufbauen als auch Rufe empfangen.

Bei einem kommenden Ruf werten alle Basisstationen die kommende MSN aus und senden einen Ruf für das gewünschte Mobilteil mit der entsprechenden Endgerätekennung TEI. Das gerufene Mobilteil stellt die Verbindung zur stärksten Basisstation her, die dann das Gespräch exklusiv übernimmt. Bei einem gehenden Ruf wird die günstigste Basisstation automatisch durch das Mobilteil gewählt und über diese die Verbindung aufgebaut.

Bei einem Anschluß hinter der Hicom-Nebenstellenanlage (PABX) mit mehr als einem S₀-Bus erhalten bei einem ankommenden Ruf für ein Mobilteil ebenfalls alle Basisstationen Signalisierungen (Rufzuordnung durch die Hicom-Nebenstellenanlage) und rufen das gewünschte Mobilteil. Die erste Station, die das Mobilteil erreicht, erhält das Gespräch. Dadurch kann ein Mobilteil auch in den Funkbereichen unterschiedlicher S₀-Busse lokalisiert werden.

### Handover

Ein manuelles Handover zwischen zwei Funkzellen während eines Gesprächs (Intercell Handover) ist nach dem Prinzip des Umsteckens am Bus durch das Leistungsmerkmal TP (**T**erminal **P**ortability) möglich. Bei Feststellen einer Reichweitenüberschreitung durch das Mobilteil erhält der Teilnehmer ein Warnsignal, das ihn zu einer Aktion auffordert. Er sendet ein Signal an die aktuelle Basisstation, die wiederum eine Anforderung für das Merkmal TP an das Amt (Digitale Ortsvermittlungsstelle DOVST) bzw. die Hicom-Nebenstellenanlage PABX schickt. Das Mobilteil sendet anschließend ein Signal zu der empfangsmäßig besten Bassisstation, die dann das Gespräch übernimmt. Die Verbindung wird dabei ohne Auslösen des B-Kanals an die neue Basisstation übergeben. Während dieses Vorgangs kann es je nach Umschaltdauer der Basisstationen zu einer kurzen Unterbrechung der Funkverbindung kommen. Um die Unterbrechungszeit zu minimieren, sollten die Basisstationen synchronisiert betrieben werden. Im Überlappungsbereich mehrerer Funkzellen wird ein ständiges Umschalten durch eine ausreichend große Hysterese unterbunden.

### Internverbindungen, Halten, Rückfrage, Übergabe

Aus Sicht des Amtes besteht kein Unterschied zwischen Extern- und Internverbindung. Internverbindungen zwischen unterschiedlichen Basisstationen an einem Bus sind daher nur als Externverbindung über das Amt möglich. Internverbindungen innerhalb des Funkbereichs einer Basisstation werden über diese realisiert unabhängig vom Amt realisiert.

Eine Rückfrage aus einem aktiven Gespräch heraus kann durch Einleiten des Euro-ISDN-Leistungsmerkmals CH (**C**all **H**old) und anschließender Wahl der gewünschten Nummer ("extern" oder "intern") erfolgen. Das Merkmal CH bewirkt ein Halten des aktuellen Gesprächs, wobei dieses kommend oder gehend sein kann. Der bisher benutzte B-Kanal wird dabei für andere Aktionen des einleitenden Teilnehmers freigegeben (Annahme ankopfender Rufe, Herstellen einer weiteren Verbindung), wodurch auch eine Rückfrage oder Makeln möglich wird.

Eine Übergabe vor bzw. nach Melden einer dritten Endstelle ist durch das Euro-ISDN-Leistungsmerkmal ECT (**E**xplicit **C**all **T**ransfer) spezifiziert, jedoch ist ein Einführungstermin dieses Leistungsmerkmals zur Zeit noch nicht festgelegt. Die Vorbereitung bzw. Realisierung dieses Merkmals ist jedoch sinnvoll für einen zukünftigen Einsatz.

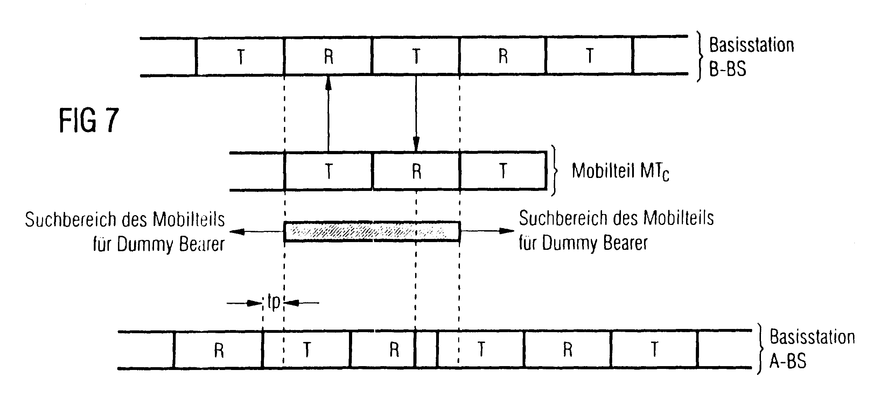

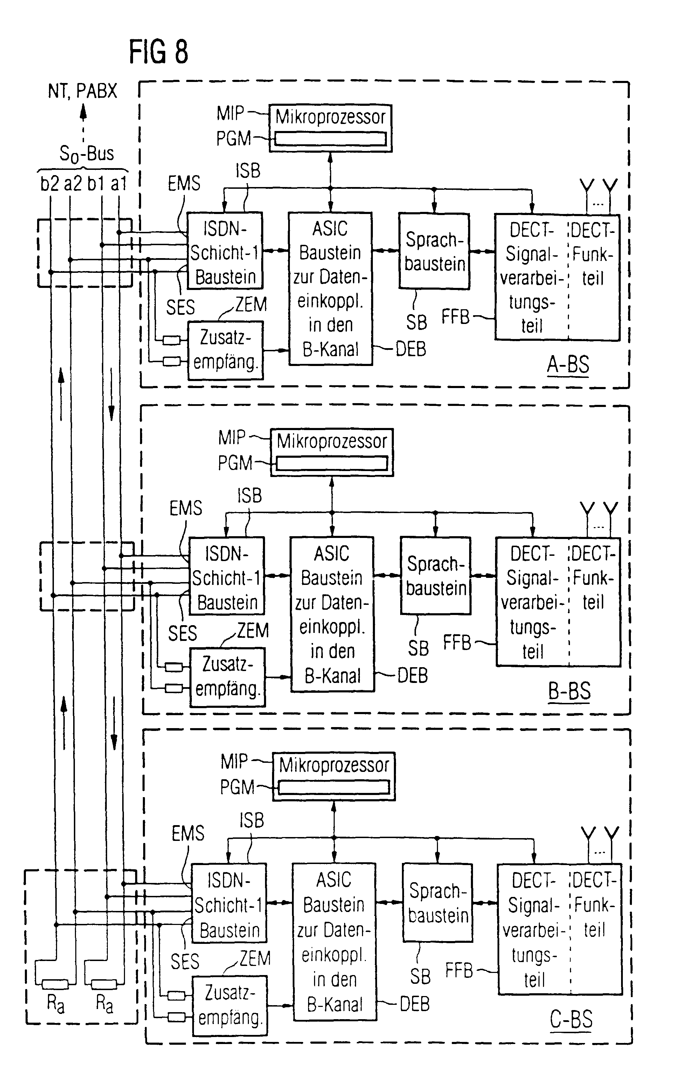

Ein erstes Ausführungsbeispiel zur Herstellung der Synchronisation der Basisstationen am S₀-Bus und ein zweites Ausführungsbeispiel zur Realisierung des "Handover" der Schnurlostelefone am S₀-Bus werden anhand der FIGUREN 7 und 8 in Verbindung mit den FIGUREN 2 bis 6 erläutert.

Es wird ein kleines mehrzelliges DECT-Schnurlostelekommunikationssystem beschrieben, dessen Basisstationen wie bei dem ersten Ausführungsbeispiel durch einen ISDN-S₀-Bus verbunden sind. Das System bietet dabei ohne zusätzliche Verkabelung eine Erhöhung der Reichweite und kann externe Gespräche nahezu unterbrechungsfrei weiterreichen, wenn der Benutzer zwischen den Funkzellen (Basisstationen) wechselt. Der Überlappungsbereich der Funkfelder der Basisstationen muß nicht die Basisstationen selbst einschließen. Außerdem wird die Anzahl der Mobilteile in dem gesamten Telekommunikationssystem erhöht. Eine Weiterverbindung von Gesprächen innerhalb der Funkzelle einer Basisstation (Internverbindung) ist nicht vorgesehen.

### Synchronität

Durch die Synchronität der Basisstationen A-BS, B-BS, C-BS wird es dem Mobilteil MT_{c} ermöglicht, die jeweils funktechnisch günstigste Basisstation A-BS, B-BS, C-BS für eine Verbindung auszuwählen, während die bestehende Verbindung weiter gehalten wird und ohne daß im Mobilteil MT_{c} ein zusätzlicher Hardware-Aufwand erforderlich ist. Ein Verbindungswechsel kann im Hintergrund vorbereitet und in sehr kurzer Zeit durchgeführt werden. In einem voll asynchronen System würde das Mobilteil MT_{c} nach Verbindungsverlust fast alle Zeitschlitze (einen Zeitschlitz nach dem anderen) der in dem System angeordneten Basisstationen A-BS, B-BS, C-BS absuchen müssen.

Nach Aufbau der ISDN-Schicht-1 des S₀-Bus steht den Basisstationen A-BS, B-BS, C-BS der gleiche Referenztakt zur Verfügung. Dieser Takt ist zwar jitterbehaftet (max. ± 7 % einer Bitperiode von 5,2 µs), aber die Langzeitstabilität entspricht der des Netzknotens (max. ± 10⁻⁷, wenn die Teilnehmervermittlungsstelle frei läuft; min. ± 10⁻¹¹, wenn die Teilnehmervermittlungsstelle durch den Bezugstakt synchronisiert wird). Durch ein Stopfbitverfahren wird der Rahmentakt des DECT-Systems (Slave) an den ISDN-Takt (Master) angepaßt. Ein 10 ms-Rahmen wird hierbei um eine halbe Bitperiode (1/2 x 868 ns) verlängert oder verkürzt. Die DECT-Rahmen der Basisstationen A-BS, B-BS, C-BS am S₀-Bus sind nun zwar frequenzsynchronisiert, aber ihre Phasenlage ist unbestimmt und kann um maximal 5 ms voneinander abweichen (vgl. FIGUR 7). Um diese 5 ms durch Stopfbits auszugleichen, würden ca. 115 s benötigt werden. Nach Abbau der ISDN-Schicht 1 driften die Oszillatoren der Basisstationen A-BS, B-BS, C-BS voneinander weg. Geht man davon aus, daß durch zusätzliche Maßnahmen (z. B. durch einen digitalen temperaturkompensierten Oszillator DTCXO) die Stabilität um eine Größenordnung von den in der DECT-Spezifikation (Standard) geforderten 5 ppm auf 0,5 ppm verbessert wird, würden die DECT-Stationen A-BS, B-BS, C-BS trotzdem bereits nach 1,7 s asynchron werden. Dabei wird ein Versatz von einem Bit als Asynchronität betrachtet.

Dies zeigt, daß eine Phasensynchronität zwischen den am Gesamtsystem beteiligten DECT-Basisstationen A-BS, B-BS, C-BS nur mit Hilfe des S₀-Bus weder in hinreichend kurzer Zeit erreichbar ist noch für eine nennenswerte Zeit nach der Verbindungsauslösung aufrechterhalten werden kann.

Bei bestehender Frequenzsynchronität der Basisstationen A-BS, B-BS, C-BS kann auf die Synchronität der DECT-Rahmen verzichtet werden, wenn das Mobilteil MT_{c} seinen vollen 10 ms-Zeitschlitz nach im DECT-Standard vorgesehenen Dummy-Bearer einer anderen Basisstation - im vorliegenden Fall der Basisstation A-BS - absucht. Wie aus der FIGUR 7 entnommen werden kann, können bis auf einen Zeitschlitz alle anderen Zeitschlitze erfaßt werden. Die Verdeckung eines Zeitschlitzes durch die eigene Basisstation - im vorliegenden Fall die Basisstation B-BS - fällt dann nicht ins Gewicht, wenn die am Gesamtsystem beteiligten Basisstationen A-BS, B-BS, C-BS die Zeitlage des Dummy-Bearer nach statistischen Gesichtspunkten ändern.

### Datenübertragung

Die Übertragung von Daten zwischen den DECT-Basisstationen A-BBS, B-BS, C-BS erfolgt über das letzte Bit (LSB = **L**ast **S**ignificant **B**it) eines aktiven B-Kanals nach der "Bit-Stealing-Methode". Die Basisstationen A-BS, B-BS, C-BS haben ausgehend von FIGUR 4 jeweils den in FIGUR 8 prinzipiell dargestellten Schaltungsaufbau. Der Schaltungsaufbau besteht dabei im wesentlichen aus folgenden Bausteinen bzw. Funktionsblöcken, einem funktechnischen Funktionsblock aus DECT-Funkteil und DECT-Signalverarbeitungsteil FFB, einem Sprachbaustein SB, einem als ASIC ausgebildeten Baustein zur Dateneinkopplung in den B-Kanal DEB, einem ISDN-Schicht-1-Baustein ISB mit einer Sendestufe SES und einer Empfangsstufe EMS sowie einem Zusatzempfänger ZEM, die in der angegebenen Reihenfolge zwischen der Antenne und dem S₀-Bus in Serie geschaltet sind und die von einem Mikroprozessor MIP gesteuert werden. Der Mikroprozessor MIP enthält analog zu dem Mikroprozessor µP nach FIGUR 4 wieder ein Programmodul PGM mit der Realisierung des ISO/OSI-Schichtenmodells.

Für die Datenübertragung nach der vorstehend erwähnten "Bit-Stealing-Methode" ersetzt die sendende Station A-BS, B-BS, C-BS das letzte Bit (LSB) eines PCM-Oktetts durch ihre Signalisierungsdaten. Die anderen am Gesamtsystem beteiligten Basisstationen A-BS, B-BS, C-BS empfangen diese Information über den Zusatzempfänger ZEM (FIGUR 8), der zu ihrer eigenen S₀-Sendestufe SES parallel geschaltet wird, ohne daß die Spezifikation der ISDN-Schicht-2 des S₀-Bus verletzt wird (FIGUR 8). Diese Methode bietet eine synchrone Simplex-Datenübertragung mit maximal 8000 Baud, die durch eine Verschlechterung des Störabstandes (theoretisch um 6 dB) im B-Kanal erkauft wird. Die Störungen der Gesprächsverbindung werden in Grenzen gehalten, wenn zum einen die Datentaktrate auf z. B. 2000 Baud reduziert wird, also nur noch das letzte Bit (LSB) jedes vierten Oktetts benutzt werden. Es wird ein Übertragungsverfahren ähnlich dem HDLC-Verfahren (**H**igh **D**ata **L**ink **C**ontrol) verwendet. Ein Datenpaket von 64 Byte Länge (8 Byte Startflag, 52 Byte Daten, 2 Byte Sicherung, 2 Byte Stopflag) kann bei 2000 Baud in 256 ms übertragen werden. Diese kurze Übertragungszeit verschlechtert die subjektive Übertragungsqualität im B-Kanal nur unwesentlich.

### B-Kanal-Durchschaltung

### Verbindungsaufbau

Das Mobilteil MT_{c} hat sich bei der Basisstation B-BS "eingeloggt" und baut über den D-Kanal der Basisstation B-BS ein Externgespräch mit einem B-Teilnehmer auf. Aus Sicht der Vermittlungseinrichtung ist der B-Kanal, über den das Gespräch geführt wird, einer bestimmten TE-Nummer (TEI = **T**erminal **E**ndpoint **I**dentifier) dieses S₀-Bus zugeordnet. Diese Zuordnung könnte nur durch Leistungsmerkmale der Vermittlung (Terminal Portability; vgl. erstes Ausführungsbeispiel) geändert werden. Die Basisstation B-BS teilt nun über eine B-Kanal-Signalisierung die Gesprächsdaten [TEI, RFPI (**R**adio **F**ixed **P**art **I**dentity), IPUI (**I**nternational **P**ortable **U**ser **I**dentity), B-Kanal etc.] den anderen Basisstationen A-BS, C-BS mit.

### Weiterverbindung

Während des Gespräches sucht das Mobilteil MT_{c} im Hintergrund nach Dummy-Bearer der anderen am System beteiligten Basisstationen A-BS, C-BS. Reißt die Verbindung zur Basisstation B-BS ab oder bietet eine der anderen Basisstationen A-BS, C-BS bessere Funkfeldverbindungen, so "loggt" sich das Mobilteil MT_{c} bei dieser Basisstation A-BS, C-BS ein. Anhand der vorher übermittelten Daten kann diese Basisstation A-BS, C-BS diesem Mobilteil MT_{c} ihren B-Kanal wiederzuordnen und quasi verzögerungslos durchschalten. Die Basisstation B-BS sperrt nach Verlust des Mobilteils MT_{c} den B-Kanalzugriff.

### Verbindungsabbau

### Mobilteil löst aus

Das Auslösekommando wird vom Mobilteil MT_{c} zur Basisstation A-BS, C-BS übertragen, die es wiederum per B-Kanal-Daten zur Basisstation B-BS überträgt. Die Basisstation B-BS löst dann über den D-Kanal die Verbindung aus. Dies kann von der Basisstation A-BS, C-BS anhand der bekannten TE-Nummer der Basisstation B-BS mitgelesen werden, indem das "Release" der Vermittlung als Kommando gewertet wird.

### B-Teilnehmer löst aus

Die Vermittlung baut per D-Kanal-Prozedur die Gesprächsverbindung mit der Basisstation B-BS ab. Dies kann von der Basisstation A-BS, C-BS anhand der bekannten TE-Nummer der Basisstation B-BS mitgelesen werden, indem das "Release" der Vermittlung als Kommando gewertet wird.

### Mobilteil nicht mehr im Funkfeld

Die Basisstation B-BS bekommt innerhalb einer Karenzzeit keine Meldung von einer der anderen Basisstationen A-BS, C-BS über die B-Kanal-Signalisierung und baut die Verbindung ab.

### Realisierungsaufwand

Die ISDN-Schicht-2 muß in der Lage sein, drei verschiedene TE-Nummern in Empfangsrichtung zu verarbeiten. Das Mobilteil MT_{c} muß im Verbindungszustand in der Lage sein, nach weiteren Basisstationen zu suchen. Der Analogteil des Zusatzempfängers ZEM kann durch einen Differenzverstärker und einen Komparator realisiert werden. Die restliche Signalverarbeitung erfolgt digital. Da kritische Aufgaben, wie das Regenerieren des S₀-Taktes weiterhin von dem ISDN-Schicht-1-Baustein ISB abgeleitet werden, der über eine adaptive Empfangsstufe verfügt, sollte auch mit diesem einfachen Empfänger eine Reichweite über den S₀-Bus von 150 bis 200 m je nach Kabeltyp realisiert werden können. Der Hauptteil der Realisierung wird durch die Systemsoftware getragen, so daß das System kostengünstig hergestellt werden kann.

### Autokonfiguration

Beim Aufbau oder einer späteren Erweiterung des Gesamtsystems muß zwischen den Basisstationen und Mobilteilen ein Datenaustausch stattfinden (RFPI, IPUI, etc. gemäß DECT-Standard). Dieser Aufwand und die damit verbundenen Fehlermöglichkeiten können verringert werden, wenn die Basisstationen des Systems diese Daten bei einer Änderung über die B-Kanal-Signalisierung den am S₀-Bus angeschlossenen Basisstationen mitteilen. Diese Daten können dann von den Basisstationen in die Mobilteile kopiert werden. Zur Konfiguration des Gesamtsystems (genauer: Anmeldung anderer Basisstationen und Mobilteile) reicht es also aus, wenn von jeder Basisstation ein Externgespräch geführt wird.

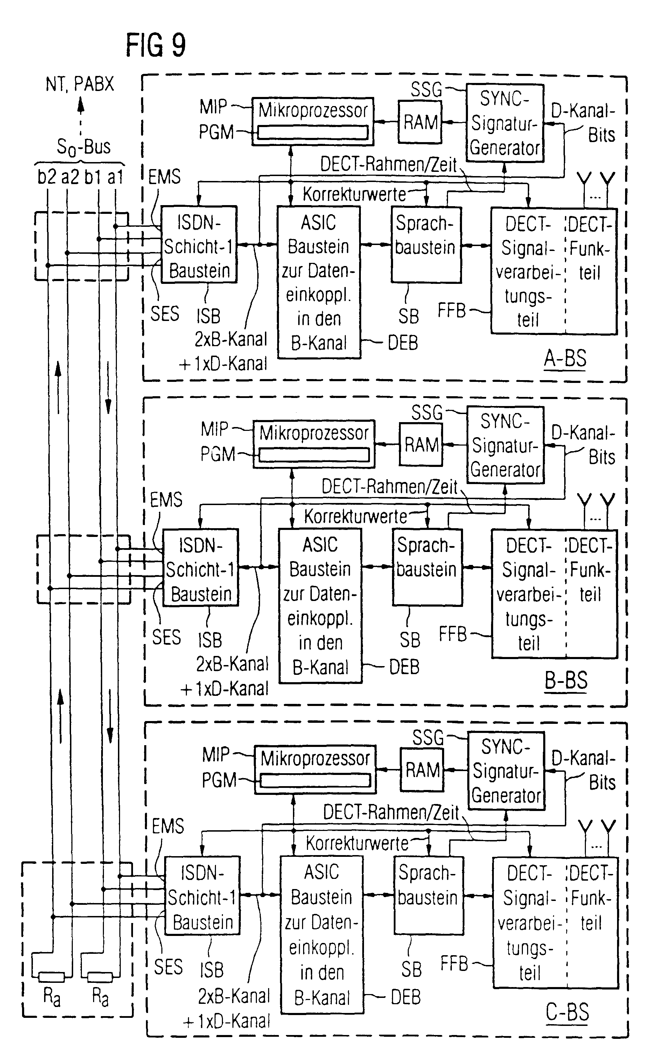

Ein zweites Ausführungsbeispiel zur Herstellung der Synchronisation der Basisstationen am S₀-Bus wird anhand der FIGUR 9 in Verbindung mit den FIGUREN 2 bis 6 erläutert.

Das Timing des DECT-Systems nach FIGUR 1 mit den Basissstationen A-BS, B-BS, C-BS wird durch den 10ms-Zeitrahmen ZR nach FIGUR 4 und durch den 160ms-Multi-Zeitrahmen MZR strukturiert. Soll eine bestehende HF-Verbindung von einer Basisstation - z.B. die Basisstation B-BS - auf eine der anderen Basisstationen A-BS, C-BS umgelegt werden, weil z. B. das Mobilteil MT_{c} den Funkbereich der Basisstation B-BS verläßt, ist es erforderlich, daß die Basisstationen A-BS, B-BS, C-BS ihre Takte (Rahmen) miteinander synchronisieren.

Durch diese Maßnahme ist es möglich, eine HF-Verbindung zwischen Basisstationen, die keine Funkverbindung miteinander haben, zu übergeben, ohne daß es für den Benutzer zu spürbaren Störungen kommt.

Im weiteren wird davon ausgegangen, daß die Basisstationen A-BS, B-BS, C-BS durch einen gemeinsamen ISDN- S₀-Bus verbunden sind, daß die Synchronisation der Basisstationen A-BS, B-BS, C-BS über den S₀-Bus erfolgt und daß die Basisstationen A-BS, B-BS, C-BS ausgehend von FIGUR 4 jeweils den in FIGUR 9 prinzipiell dargestellten Schaltungsaufbau haben.

Der Schaltungsaufbau besteht dabei im wesentlichen aus folgenden Bausteinen bzw. Funktionsblöcken, einem funktechnischen Funktionsblock aus DECT-Funkteil und DECT-Signalverarbeitungsteil FFB, einem Sprachbaustein SB, einem als ASIC ausgebildeten Baustein zur Dateneinkopplung in den B-Kanal DEB, einem ISDN-Schicht-1-Baustein ISB mit einer Sendestufe SES und einer Empfangsstufe EMS, die in der angegebenen Reihenfolge zwischen der Antenne und dem S₀-Bus in Serie geschaltet sind und die von einem Mikroprozessor MIP gesteuert werden. Der Mikroprozessor MIP enthält analog zu dem Mikroprozessor µP nach FIGUR 4 wieder ein Programmodul PGM mit der Realisierung des ISO/OSI-Schichtenmodells. Darüber hinaus sind noch ein Synchronisationssignatur-Generator SSG (SYNC-Signatur-Generator) und ein Speicherbaustein RAM vorgesehen, die in der genannten Reihenfolge zwischen dem ISDN-Schicht-1-Baustein ISB und dem Mikroprozessor MIP in Serie geschaltet sind.

Bisher wurde die Synchronisation - wie bereits eingangs erwähnt - über eine separate Verkabelung zwischen den Basisstationen erreicht.

Nach Aufbau der ISDN-Schicht-1 im ISDN-Schicht-1-Baustein ISB beobachten die Basisstationen A-BS, B-BS, C-BS den D-Kanal in Empfangsrichtung [Richtung ,,Netzabschluß NT (**N**etwork **T**ermination) → Endeinrichtung TE (**T**erminal **E**ndpoint)"]. Nachdem ein Start-Flag (Oktett 01111110) erkannt wurde, wird aus den nun folgenden 32 Bits (oder mehr), ohne weitere Diskriminierung, ein 16 Bit langes CRC-Wort gebildet (**C**ycle **R**edundancy **C**heck).

Weiterhin wird bei Beginn eines DECT-Multi-Zeitrrahmens MZR ein Zähler gestartet, der nach Bildung des CRC-Wortes angehalten und dessen Zählerwert ausgelesen wird.

Auf diese Weise wid eine Synchronisationssignatur (Synchronisationssignatur = CRC-Wort + Zählerwert) generiert, die das DECT-Timing mit dem S₀-Bus-Timing verknüpft.

Die Synchronisationssignaturen werden fortlaufend erzeugt und in dem Ringspeicher RAM abgelegt, der eine Liste (Signaturtabelle) der Signaturen z.B. der letzten 5 Sekunden darstellt. Diese Liste wird in allen Basisstationen A-BS, B-BS, C-BS quasi synchron erstellt, da die ISDN-Schicht-1 in allen Basisstationen A-BS, B-BS, C -BS (Endeinrichtungen TE) gleichzeitig hochgefahren wird (ISDN-Vorschrift).

Zur Synchronisation der Basisstationen A-BS, B-BS, C-BS wird die letzte Synchronisationssignatur durch den B-Kanal oder als Paketdaten im D-Kanal zur Basisstation A-BS, B-BS, C-BS mit Synchronisationswunsch übertragen. Die Basisstation A-BS, B-BS, C-BS mit Synchronisationswunsch benutzt das 16 Bit lange CRC-Wort, um in ihrer Liste den entsprechenden Zählerwert zu finden. Aus der Differenz zwischen eigenem Zähler und dem übermittelten Wert ergibt sich der Korrekturwert für den DECT-Rahmen.

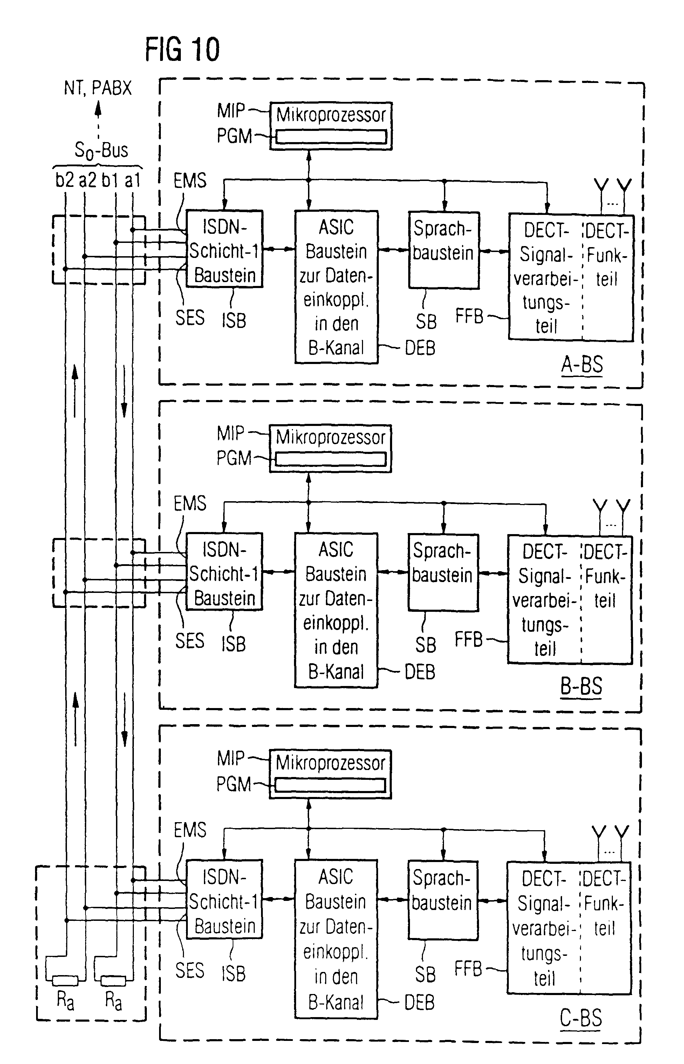

Ein drittes Ausführungsbeispiel zur Realisierung des "Handover" der Schnurlostelefone am S₀-Bus und ein drittes Ausführungsbeispiel zur Herstellung der Synchronisation der Basisstationen am S₀-Bus werden anhand der FIGUREN 10 bis 15 erläutert.

### I. Verfahren zur Steuerung des Handover von Verbindungen durch DECT-Basisstationen am S_{0_{-Bus}}

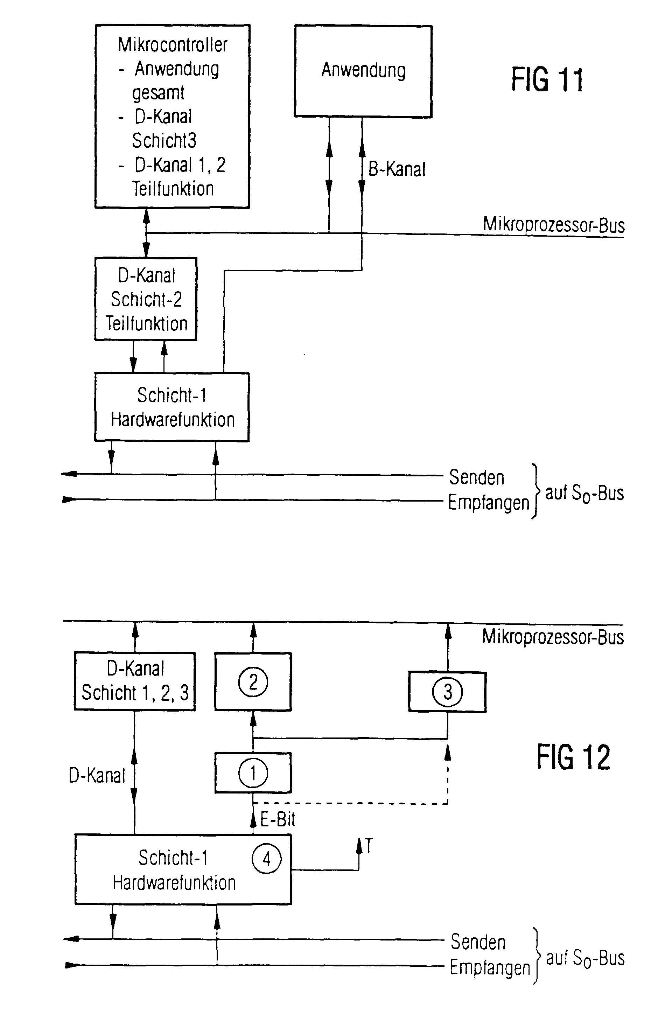

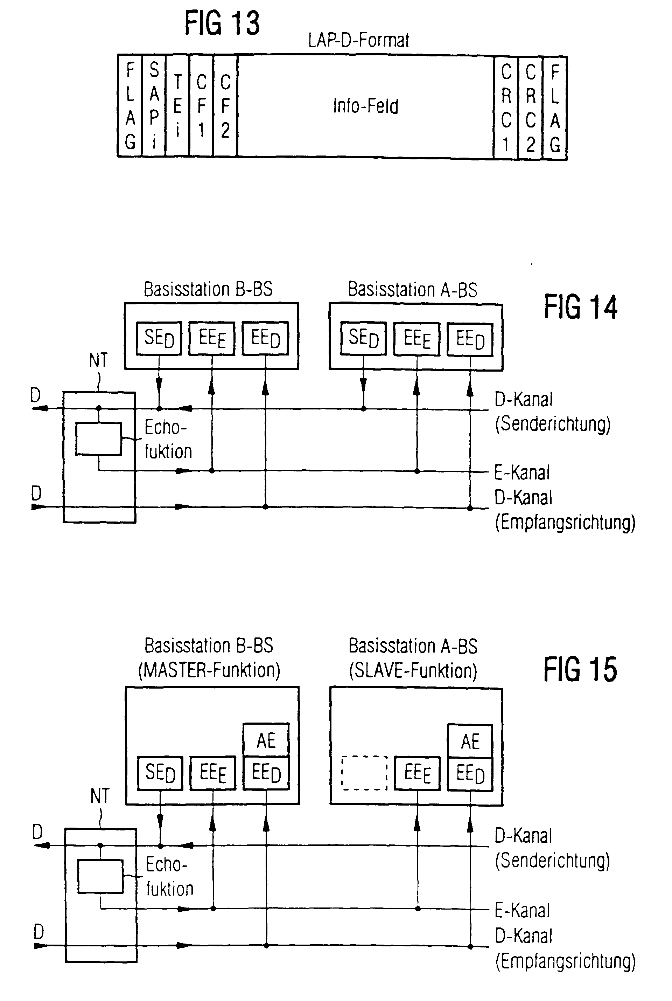

- Allgemeine Problemstellung
   Folgende Konfiguration mit dem Telekommunikationsnetz wird behandelt:
   . Die Basisstationen A-BS, B-BS, C-BS zwischen denen das Handover stattfinden kann, sind an denselben S₀-Bus eines Basisanschlusses des ISDN (**I**ntegrated **S**ervices **D**igital **N**etwork; vgl. Druckschrift "Nachrichtentechnik Elektronik, Berlin 45, **T**eil: 1 bis 10, **T**1: (1991) Heft 3, Seiten 99 bis 102; **T**2: (1991) Heft 4, Seiten 138 bis 143; **T**3: (1991) Heft 5, Seiten 179 bis 182 und Heft 6, Seiten 219 bis 220; **T**4: (1991) Heft 6, Seiten 220 bis 222 und (1992) Heft 1, Seiten 19 bis 20; **T**5: (1992) Heft 2, Seiten 59 bis 62 und (1992) Heft 3, Seiten 99 bis 102; **T**6: (1992) Heft 4, Seiten 150 bis 153; **T**7: (1992) Heft 6, Seiten 238 bis 241; **T**8: (1993) Heft 1, Seiten 29 bis 33; **T**9: (1993) Heft 2, Seiten 95 bis 97 und (1993) Heft 3, Seiten 129 bis 135; **T**10: (1993) Heft 4, Seiten 187 bis 190;")angeschlossen (FIGUREN 5 und 6).
   . An der Schnittstelle zum S₀-Bus werden nur solche Grundfunktionen vorausgesetzt, die derzeit an der Schnittstelle und im Telekommunikationsnetz verfügbar sind. Die Basisstationen A-BS, B-BS, C-BS haben ausgehend von FIGUR 4 jeweils den in FIGUR 10 prinzipiell dargestellten Schaltungsaufbau. Der Schaltungsaufbau besteht dabei im wesentlichen aus folgenden Bausteinen bzw. Funktionsblöcken, einem funktechnischen Funktionsblock aus DECT-Funkteil und DECT-Signalverarbeitungsteil FFB, einem Sprachbaustein SB, einem als ASIC ausgebildeten Baustein zur Dateneinkopplung in den B-Kanal DEB sowie einem ISDN-Schicht-1-Baustein ISB mit einer Sendestufe SES und einer Empfangsstufe EMS, die in der angegebenen Reihenfolge zwischen der Antenne und dem S₀-Bus in Serie geschaltet sind und die von einem Mikroprozessor MIP gesteuert werden. Der Mikroprozessor MIP enthält analog zu dem Mikroprozessor µP nach FIGUR 4 wieder ein Programmodul PGM mit der Realisierung des ISO/OSI-Schichtenmodells.
   . Die Anschaltung der Basisstationen A-BS, B-BS, C-BS an den S₀-Bus kann gemäß der FIGUREN 11 und 12 auf unterschiedliche Weise, insbesondere auf der Basis unterschiedlicher Architekturmodelle erfolgen. Für FIGUR 12 gilt dabei beispielsweise:
      ① Schnittstellenanpassung zur Aufbereitung von E-Bits derart, daß Verwendung durch Standard HDLC-Empfänger (**H**igh **D**ata **L**ink **C**ontrol) möglich [vgl. FIGUR 13 in Verbindung mit der Druckschrift: Nachrichtentechnik Elektronik, Berlin; "Schnittstellen der Telekommunkation" Teil 4; 41(1991),Heft 6, Seiten 220 bis 222 und 42(1992), Heft 1, Seiten 19 und 20].
      ② HDLC-Hardwarefunktion: Empfangsseitig mit Schnittstelle über Mikroprozessor-Bus zum Software-Teil im Mikroprozessor.
      ③ Hardware-Ausweitung zur Rahmensynchronisierung mit definierten Echtzeitverhalten. Dabei ist es auch möglich, direkt auf das E-Bit aufzusetzen. Es werden alle Funktionen ohne Unterstützung des Mikrocontrollers abgewikkelt. Wesentliche Basisfunktionen von HDLC sind:
         - HDLC-Rahmensynchronisierung
         - Ausblendung der Einfügungsbits
         - CRC-Behandlung
         - Auswertung SAPI/TEI [vgl. FIGUR 13 in Verbindung mit der Druckschrift: Nachrichtentechnik Elektronik, Berlin; "Schnittstellen der Telekommunkation" Teil 4; 41(1991),Heft 6, Seiten 220 bis 222 und 42(1992), Heft 1, Seiten 19 und 20].
         - ggf. Auswertung des Info-Feldes [vgl. FIGUR 13 in Verbindung mit der Druckschrift: Nachrichtentechnik Elektronik, Berlin; "Schnittstellen der Telekommunkation" Teil 4; 41(1991),Heft 6, Seiten 220 bis 222 und 42(1992), Heft 1, Seiten 19 und 20].
      ④ Schicht-1-Funktionen
         Hier ist die Erzeugung eines zusätzlichen Signales T vorstellbar, mit dem die Schicht 1-Funktion meldet, daß ein zu sendender D-Kanal-Frame den Zugriff zum S₀-Bus erhalten hat und gesendet wird. Dabei wird die Erkennung und Prüfung der eigenen gesendeten Information beim Mithören im E-Kanal. Diese Funktion könnte aber auch direkt auf dem E-Bit selbst aufbauen und in 1) und/oder 3) implementiert werden.

Bei der betrachteten Konfiguration wird davon ausgegangen, daß die DECT-Struktur einschließlich der Handover-Funktion erhalten bleibt.

Die Handover-Funktion ist Bestandteil der Mobilitätsfunktionen in der drahtlosen Telekommunikation. Als "Handover" wird hier folgende Funktion betrachtet:
1) Das Mobilteil MT_{c} wandert während laufender Verbindungsaktivitäten aus dem Funkbereich der Basisstation B-BS in den Funkbereich der Basisstation A-BS und setzt dort die bei der Basisstation B-BS gestarteten Aktivitäten unterbrechungsfrei fort.
2) Insbesondere wird der Fall behandelt, bei dem das Mobilteil MT_{c} bei der Basisstation B-BS bereits eine aktive Sprachverbindung über das Telekommunikationsnetz mit einem fernen Partner hat. Es wird davon ausgegangen, daß die Handover-Funktion erst eingeleitet wird, wenn dieser Verbindungszustand ereicht ist und sich das Mobilteil MT_{c} während des Übergabeprozesses im Funkbereich beider Basisstationen B-BS, A-BS ist.

Daraus ergibt sich für die Basisstationen B-BS, A- BS am S₀-Bus folgendes:
a) die Basisstation A-BS muß beim Handover die zwischen der Basisstation B-BS und dem Telekommunikationsnetz bestehenden ISDN-Schicht-2-Verbindungen und ISDN-Schicht-3-Verbindungen übernehmen und nahtlos fortsetzen können. die Basisstation A-BS muß die dazu bei der Basisstation B-BS bestehenden aktuellen Parameter der Verbindungssteuerungsprozesse übernehmen.
b) dasgleiche gilt für die DECT-Schicht-3-Verbindung.
c) die Basisstation A-BS muß den bestehenden Nutzinformationskanal (B-Kanal) übernehmen. Das Umschalten zwischen der Basisstation B-BS und der Basisstation A-BS soll möglichst unterbrechungsfrei bzw. störungsfrei verlaufen.
d) Die Funkrahmen-Synchronisierung sollte auch über die S₀-Schnittstelle durchführbar sein. **Anmerkung**: Dieser Sachverhalt wird im weiteren unter II. Verfahren zur Rahmensynchronisierung der "Luftschnittstelle" von DECT-Basisstationen über den S₀-Bus der ISDN-Netzschnittstelle eingehender behandelt.
e) Als Basis für die Funktionen a) - d) ist ein Übertragungsweg zwischen den Basisstationen A-BS, B-BS zur Parameterübergabe und Koordinierung erforderlich. Entsprechend den Voraussetzungen muß dieser Weg lokalen Charakter innerhalb des Busses selber haben, da neue Funktionen nicht unterstellt werden. Im Netz selbst dürfen solche lokalen Übertragungen nicht stören (Kompatibilität mit definierten Schnittstellenfunktionen).

- Lösungsprinzipien
   . Lokale Querkommunikation
      Zur Verwendung vorgeschlagen wird gemäß FIGUR 14 ein Informationskanal bestehend aus dem D-Kanal (Sende- und Empfangsrichtung) und dem E-Kanal (Echo-D-Kanal) [vgl. II. Verfahren zur Rahmensynchronisierung der Luftschnittstelle" von DECT-Basisstationen über den S_{0_{-Bus der ISDN-Netzschnittstelle}}]. Dabei wird zusätzlich die dort erwähnte erweiterte Nutzbarkeit zugrundegelegt. Der E-Kanal ist ein Kanal, auf dem die in dem Netzabschluß NT durch eine Echofunktion veränderte D-Kanalinformation übertragen wird.
      .. Jede Basisstation A-BS, B-BS erhält neben einer Sendeeinrichtung SE_{D} und einer Empfangseinrichtung EE_{D} für den D-Kanal auch am E-Kanal eine Empfangseinrichtung EE_{E}, die identische Grundfunktionen wie die am D-Kanal hat, also den üblichen Format-Konventionen der HDLC-Protokolle genügt. FIGUR 14 zeigt ein Prinzipschaltbild dieser Konfiguration.
      .. Format, Adressen
         ... Basis für die Querkommunikation ist das Format "**U**numbered **I**nformation Frame" (UI-Rahmen) nach den Konventionen des D-Kanal-Schicht-2-Protokolls (LAP-D) [vgl. FIGUR 13 in Verbindung mit der Druckschrift: Nachrichtentechnik Elektronik, Berlin; "Schnittstellen der Telekommunkation" Teil 4; 41(1991),Heft 6, Seiten 220 bis 222 und 42(1992), Heft 1, Seiten 19 und 20].
         ... SAPI (**S**ervice **A**ccess **P**oint **I**dentifier)
         ... Bei Standardisierungsgremien (z.B. ITU, ETSI) aus dem reservierten Bereich in Standards zu definieren (muß mit Telekommunikationsnetz kompatibel sein).
         ... TEI (**T**erminal **E**ndpoint **I**dentifier) : Wert: 127 dec
         ... Weitere anwendungsspezifische Adressen: Im Datenfeld des UI-Rahmen. Dieser kann damit im Grundsatz physikalisch an alle Basisstationen A-BS, B-BS, C-BS gesendet werden (broadcasting). Selektivität kann soweit erforderlich nach anwendungsspezifischen Gesichtspunkten gestaltet werden.
      .. Fehlersicherung, Behebung
         Redundanz und Fehlererkennung entsprechen der LAP-D-Konvention. Darauf aufbauend wird für die Fehlerbehebung nachstehend skizziertes Verfahren vorgeschlagen. Unter Berücksichtigung des lokalen Charakters des Übertragungsweges im S₀-Bus wird dabei folgendes angenommen:
         ... Das Faktum "Frame richtig/falsch empfangen" wird von allen Basisstationen A-BS, B-BS, C-BS gleichsinning erkannt. Daraus folgt, daß auch die jeweils im D-Kanal sendende Basisstation A-BS, B-BS, C-BS selbst im E-Kanal das Faktum "richtig/falsch" erkennen kann. Gegebenenfalls kann sie eine Wiederholung der Übertragung anstoßen, ohne daß explizite Quittierung durch die empfangenden Baisstationen nötig ist. Zur Identifizierung solcher lokal gesendeten UI-Rahmen sind die Basisstationen A-BS, B-BS deshalb im sendeseitigen D-Kanal mit einer Teileinrichtung ausgerüstet, die definitiv erkennt, wenn ein solcher UI-Rahmen den Zugriff zum D-Kanal erhalten hat und übertragen wird. Damit kann ein solcher Rahmen unter Echtzeitbedingungen aus der Folge aller im D-Kanal gesendeten Rahmen selektiv herausgefiltert und analysiert werden. Die zeitliche Zuordnung Senden/Empfangen wird durch den gegebenen festen Bitversatz in der Echofunktion "D-Kanal → E-Kanal" ermöglicht.
      .. Sonstige Funktionen
         Die Empfänger am E-Kanal können auch zusätzlich mit einer Teileinrichtung versehen werden, die eine Echtzeitanalyse des Rahmeninhaltes während des Einlaufes des Bitstromes erlaubt. Wurde ein Rahmen fehlerfrei empfangen, liegen damit unmittelbar nach Rahmenende Schaltkriterien für kürzest mögliche Reaktionen vor. Zur Reaktionszeitverkürzung bei längeren Rahmen kann auch eine abschnittweise Zwischensicherung bei der sendenden Basisstation und den empfangenden Basisstationen vorgesehen werden.
   . Verfahren zur Übergabe/Übernahme der Verbindung
      Aufbauend auf die lokale Querkommunikation enthält das Verfahren weiterhin folgende Prozedurschritte:
      a)
         - Nach Erkennung einer Handover-Anforderung des bestimmten Mobilteils MT_{c} (identifiziert durch seine Kennung) sendet die Basisstation A-BS ein Telegramm mit folgendem Inhalt:
            . Absender: Adresse A-BS
            . Empfänger: Alle Basisstationen
            . Kommando: Handover-Anforderung
         - MT_{c} -Identität: Es wird davon ausgegangen, daß das Mobilteil MT_{c} nur eine Verbindung hat. Andernfalls müssen die Verbindungen zusätzlich identifiziert werden.
         - Die Basisstation B-BS (steuert die Verbindung mit dem Mobilteil MT_{c}) erkennt die Identität des Mobilteils MT_{c}.
      b) Die Basisstation B-BS übergibt dann in einem selektiven Telegramm an die Basisstation A-BS alle aktuellen relevanten Parameter wie:
         . ISDN-Schicht 2: TEI, Laufnummernvariable, Prozeßzustand
         . ISDN-Schicht 3: B-Kanal, Callreferenz, Rufzustand
         . DECT-Schicht 3: Transaktion-Identifizierung, Rufzustand.
      c)
         - Die Basisstation A-BS installiert nach Empfang entsprechend synchrone interne Steuerungsprozesse und startet die Analyse von Protokollaktivitäten am D-Kanal und an der DECT-Schnittstelle. Die Basisstation A-BS bleibt aber zunächst weiter passiv.
         - Die Basisstation A-BS bestätigt den Verfahrensschritt c) mit einem selektiven Bestätigungstelegramm an die Basissstation B-BS.
      d) Fallverzweigung:
         d1) Hat die Basisstation B-BS zwischenzeitlich keine diese verbindung betreffende Protokollaktivität des Telekommunikationsnetzes empfangen oder des Mobilteils MT_{c} erkannt, wird die Übergabe der Initiative zur Weiterführung der Verbindung in einem selektiven Telegramm an die Basisstation A-BS bestätigt.
         d2)
            - Wird zwischenzeitlich aufgrund von TEI-Managementaktionen eine Erneuerung des TEI für die ISDN-Schicht-2 Verbindung und deren Wiederaufbau erforderlich, führt die Basisstation B-BS diese Aktion durch und storniert und aktualisiert die entsprechenen Parameter bei der Basisstation A-BS nach Verfahrensschritt b).
            - Fortsetzung: Schritte c), dl) usw.
         d3) Wird zwischenzeitlich eine andere Schicht-2 Information diese Verbindung betreffend im D-Kanal empfangen (auch bereits von der Basisstation A-BS erkennbar), reagiert die Basisstation B-BS mit dem verfahrensschritt d1). Die Bbasisstation A-BS führt die Prozedur dann fort. **Anmerkung**: Es wird davon ausgegangen, daß die Übergabe "Basisstation B-BS → Basisstation A-BS" normalerweise innerhalb der gegebenen Überwachungszeiten der ISDN-Schicht-2 ablaufen kann. Anderenfalls reagiert das Telekommunikationsnetz nach Ablauf des Timers mit entsprechenden "Recovery-Prozeduren" innerhalb deren Verlauf die Übergabe auf jeden Fall definitiv abgeschlossen sein dürfte.
         d4) Löst das Mobilteil MT_{c} die Verbindung aus, führt die Basisstation B-BS diese Aktion zu Ende und storniert den Übergabevorgang mit einem selektiven Telegramm an die Basisstation A-BS.
         d5) Behandlung von Kollisionen
            - Der Verfahrensschritt dl) kann im Prinzip mit Aktivitäten, wie in den Verfahrensschritten d2) - d4) behandelt, im Detail-Zeitablauf kollidieren, da sich Vorgänge im Echo-D-Kanal mit Empfangsvorgängen im D-Kanal zeitlich überlappen können.
            - Folgendes gilt zur Konfliktauflösung:
               . Die Basisstation B-BS wird passiv, wenn die Übergabequittung an die Bbasisstation A-BS zur Aussendung im D-Kanal an die unterlagerten Steuerungskomplexe übergeben wurde, auch wenn die Quittung tatsächlich noch nicht oder noch nicht vollständig übertragen wurde. Die Basisstation A-BS wird erst aktiv, wenn diese Quittung richtig empfangen wurde.
               . Das Telekommunikationsnetz wird ausstehende Schicht-2 Prozedurschritte im Rahmen der "Schicht-2-Recovery-Prozeduren" wiederholt anstoßen. Die durch die Übergabelatenz entstehende Totzeit erscheint damit überbrückbar.
               . In verbleibenden Ausnahmefällen wird es zum Abbau der Verbindung kommen.
   . Umschaltung des Nutzkanals
      Für die Übergabe der Benutzung des zugewiesenen B-Kanales von der Basisstation B-BS an die Basisstation A-BS gelten folgende Gesichtspunkte:
      - Die Umschaltung der Sprachverbindung soll möglichst unterbrechungsfrei sein, ein wahrnehmbares "Klick" erscheint vertretbar.
      - Bei überlappender Einspeisung durch die Basisstation B-BS und die Basisstation A-BS (im Prinzip denkbar, da B-Kanal früh bei der Basisstation A-BS bekannt ist) ist zu beachten, daß beide Basisstationen A-BS, B-BS identische PCM-Worte in identische B-Kanal-Zeitschlitze einordnen müssen. Andernfalls kommt es zu nichtlinearer Signalüberlagerung, da eine "0" am S₀-Bus eine "1" physikalisch überschreibt. Das kann, insbesondere über mehrere S₀-Rahmen hinweg, zu einer Störung führen, die unangenehmer sein dürfte als eine kurze Unterbrechung.

Folgende Möglichkeiten bestehen:
a) Die Basisstation B-BS schaltet mit Bereitstellung der Quittung (Verfahrensschritt d1) ab und die Basisstation A-BS mit Empfang dieser Quittung an. Die resultierende Unterbrechungszeit folgt aus: Wartezeit der Quittung auf Buszugriff, Übertragungszeit, Reaktionszeit von der basisstation A-BS.
b) Dei Basisstation B-BS schaltet erst ab, wenn sie am E-Kanal das Ende der fehlerfreien Übertragung dieser Quittung erkannt hat. Dann verbleibt als Latenzzeit nur die Reaktionszeit von der Basisstation A-BS.

### II. Verfahren zur Rahmensynchronisierung der "Luftschnittstelle" von DECT-Basisstationen über den S₀-Bus der ISDN-Netzschnittstelle

Drahtlose, zellenorientierte Telekommunikationssysteme wie DECT-Systeme arbeiten nach folgendem Prinzip:
- Innerhalb einer Funkzelle bestimmt die Basisstation auf der "Luftschnittstelle" zu den mit ihr kommunizierenden Mobilstationen den Zeitmultiplexrahmen und damit die relative zeitliche Lage der Zeitschlitze, die in den Frequenzbändern zum Informationsaustausch verbindungsindividuell belegt werden. Basisstationen sind im Prinzip bezüglich der im Betrieb verwendeten Phasenlage des Rahmentaktes voneinander unabhängig.

Eine gegenseitige Synchronisierung ist nicht ausgeschlossen. Die zu wählenden Verfahren bleiben den konkreten Anwendungen überlassen.

Die Rahmensynchronisierung der Luftschnittstellen verschiedenen Basisstationen kann aus folgenden Gründen erforderlich werden:
i) In Überlappungsbereichen benachbarter Funkzellen ohne gemeinsame Rahmentaktphase wird die Wiederverwendbarkeit benachbarter Zeitschlitze innerhalb eines Frequenzbandes beeinträchtigt bis ausgeschlossen.
ii) Wesentliche Voraussetzung für eine aufwandsarme Lösung: Unterbrechungsfreie Mitnahme einer bestehenden Verbindung bei einem räumlichem Wechsel zwischen benachbarten ,sich überlappenden Funkzellen.

Lokale DECT-Systeme sind zur globalen Kommunikation über die Basisstation an übergeordnete Telekommunikationsnetze wie z. B. das PSTN oder ISDN (**I**ntegrated **S**ervices **D**igital **N**etwork; vgl. Druckschrift "Nachrichtentechnik Elektronik, Berlin 45, **T**eil: 1 bis 10, **T**1: (1991) Heft 3, Seiten 99 bis 102; **T**2: (1991) Heft 4, Seiten 138 bis 143; **T**3: (1991) Heft 5, Seiten 179 bis 182 und Heft 6, Seiten 219 bis 220; **T**4: (1991) Heft 6, Seiten 220 bis 222 und (1992) Heft 1, Seiten 19 bis 20; **T**5: (1992) Heft 2, Seiten 59 bis 62 und (1992) Heft 3, Seiten 99 bis 102; **T**6: (1992) Heft 4, Seiten 150 bis 153; **T**7: (1992) Heft 6, Seiten 238 bis 241; **T**8: (1993) Heft 1, Seiten 29 bis 33; **T**9: (1993) Heft 2, Seiten 95 bis 97 und (1993) Heft 3, Seiten 129 bis 135; **T**10: (1993) Heft 4, Seiten 187 bis 190;") oder vergleichbare private Netze angeschlossen. Sofern eine Synchronisierung erforderlich wird, liegt es bei deren Konzipierung nahe, die vorgegebene Schnittstelle zum Netz sofern möglich mit einzubeziehen. Für Lösungen dieser Art gilt im Grundsatz, daß die Kompatibilität mit Schnittstelle und den darauf aufbauenden Systemfunktionen gewahrt bleiben muß.

Nachfolgend wird ein Verfahren beschrieben, mittels dessen die Funkrahmen-Synchronisierung von Basisstationen möglich ist, die z.B. lokal an den S₀-Bus eines ISDN-Basisanschlusses angeschlossen sind.

Grundsätzliche Voraussetzungen für eine Synchronisierung sind:
a) Ein gesendetes Triggersignal zur Synchronisierung muß von allen Stationen in einem in der Regel eng limitierten Zeitfenster empfangbar und auswertbar sein.
b) Alle Stationen müssen innerhalb eines eng limitierten Zeitfensters auf das erkannte Triggersignal reagieren.

Die Grundfunktionen des S₀-Busses enthalten eine Funktion, die den Aspekt a) erfüllt und von der hier vermutet wird, daß sie im Prinzip auch quantitativ den spezifischen Anforderungen des hier behandelten Synchronisierungsproblems bezüglich des Zeitfensters genügen dürfte.

Der S₀-Bus enthält als Basis für die Koordinierung von Zugriffen angeschlossener Stationen zum D-Kanal eine Echofunktion. Der Netzabschluß NT (**N**etwork **T**ermination) stellt den Übergang zwischen 4-Draht-Betrieb am S₀-Bus und 2-Draht-Betrieb auf der Anschlußleitung zum Telekommunikationsnetz her und sendet jedes im D-Kanal von einem Gerät (Basisstation) empfangene Bit u. a. als sogenanntes E-Bit im E-Kanal zu den Geräten (Basisstationen ) zurück.

Soweit bekannt und in handelsüblichen Bauteilen integriert, wird diese Funktion heute ausschließlich für diese Zugriffssteuerung in schnittstellennaher Schicht-1-Hardware intern verwendet und ist bis auf Ausnahmen für andere zusätzliche Anwendungen nicht zugänglich.

Die Verzögerung im Signalweg zwischen Aussenden eines Bits im D-Kanal und dessen Empfang als Echo im E-Kanal des S₀-Busses entspricht der Zeit von 2 Bits (ca. 10 µs). Diese Verzögerung kann in der hier vorliegenden Anwendung auch kompensiert werden [siehe Punkte a) und b)].

### Funkrahmensynchronisierung

1) Auf diese Funktion an der Schnittstelle aufbauend kann die Funkrahmensynchronisierung wie folgt durchgeführt werden (FIGUR 15):
   a) Eine Basisstation, z.B. die Basisstation A-BS, der am S₀-Bus angeschlossenen Basisstationen A-BS, B-BS, C-BS bekommt die MASTER-Funktion zugewiesen, während alle anderen Basisstationen B-BS, C-BS die SLAVE-Funktion zugewiesen bekommen.
   b) Die MASTER-Funktion besteht im wesentlichen darin, die Synchronisierung anzustoßen. Die dazu verwendeten technischen Mittel können dieselben sein, die bereits zur üblichen sendeseitigen Nutzung des D-Kanals vorhanden sind. Nach FIGUR 15 ist dies die Sendeeinrichtung SE_{D}. Die Basisstation A-BS enthält außerdem die Empfangseinrichtung EE_{E} am E-Kanal und die Empfangseinrichtung EE_{D} am D-Kanal. Im Unterschied zu dem D-Kanalempfänger EE_{D} weist der E-Kanalempfänger EE_{E} zusätzlich eine Auswerteeinrichtung AE auf. Die technische Ausführung von Empfänger und Auswerter muß den Aspekt "Zeitfenster für die Synchronsierung" berücksichtigen. Empfänger und Auswerter tasten den Bitstrom im E-Kanal ab, erkennen darin in "Echtzeit" den Synchronisierblock und leiten daraus das interne Triggersignal ab. Sie bestehen vorzugsweise z. B. aus der Kombination Serien-Parallel-Umsetzer + Octett-Zähler + Decoder (aufbauend auf der Octett-Grundstruktur des D-Kanalprotokolles). Der Empfänger am E-Kanal kann auch mit allen Teilfunktionen des Empfängers am D-Kanal ausgerüstet werden. Darauf aufbauend können alle an den S₀-Bus angeschlossenen Stationen untereinander lokal über den Pfad "D-Kanal → E-Kanal" Informationen austauschen.
   c) Die Basisstation B-BS weist die Empfangseinrichtung EE_{E} am E-Kanal und die Empfangseinrichtung EE_{D} am D-Kanal auf. Die in der Basisstation A-BS zusätzlich enthaltene Sendeeinrichtung SE_{D} für den D-Kanal wird für die der Basisstation zugewiesene SLAVE-Funktion nicht benötigt. Der E-Kanalempfänger EE_{E} weist wiederum - im Unterschied zum D-Kanalempfänger EE_{D} - die Auswerteeinrichtung AE auf. Die technische Ausführung von Empfänger und Auswerter muß wiederum den Aspekt "Zeitfenster für die Synchronsierung" berücksichtigen. Empfänger und Auswerter tasten den Bitstrom im E-Kanal ab, erkennen darin in "Echtzeit" den Synchronisierblock und leiten daraus das interne Triggersignal ab. Sie bestehen vorzugsweise z. B. aus der Kombination Serien-Parallel-Umsetzer + Octett-Zähler + Decoder (aufbauend auf der Octett-Grundstruktur des D-Kanalprotokolles). Der Empfänger am E-Kanal kann auch mit allen Teilfunktionen des Empfängers am D-Kanal ausgerüstet werden. Darauf aufbauend können alle an den S₀-Bus angeschlossenen Stationen untereinander lokal über den Pfad "D-Kanal → E-Kanal" Informationen austauschen.
   d) Die Basisstation A-BS (MASTER-Station) sendet im abgehenden D-Kanal eine verabredete Synchronisiernachricht. **Anmerkung**: Diese muß netzverträglich sein, da sie auch vom Telekommunikationsnetz empfangen wird.
   e) Die Synchronisiernachricht wird vom Netzabschluß NT reflektiert und anschließend innerhalb des Zeitfensters von allen anderen Basisstationen B-BS, C-BS (SLAVE-Stationen) im E-Kanal empfangen und ausgewertet.
   f) Daraufhin starten alle Basisstationen A-BS, B-BS, C-BS das Senden der Funkrahmen, deren gegenseitige Phasenlage dann in vertretbarem Toleranzbereich liegen dürfte.
   g) Die MASTER-Station kann selbst auch im E-Kanal ihr gesendetes Synchronisiersignal auswerten. Sie kann dann den Vorgang bei erkannten Fehlfunktionen wiederholt anstoßen. Außerdem läßt sich dadurch die Zeitverzögerung "D-Kanal → E-Kanal" eliminieren.
   h) Durch in größeren Zeitabständen ständig wiederholten Triggervorgang können u. U. außer Tritt gefallene Basisstationen resynchronisiert werden.
2) Alternative Ansätze

Das S₀-Bus-Rahmenformat enthält auch andere Bits, die hypothetisch für eine Reflektion durch den Netzabschluß NT verwendbar wären. Gegenüber dem Weg "D-Kanal → E-Kanal" bestehen jedoch folgende prinzipiellen Nachteile:
i) Die Reflektion durch Netzabschluß NT ist bis heute nicht in Grundfunktion verankert.
ii) Die in Frage kommenden Bits werden u. U. netzspezifisch benutzt.

Der E-Kanal hat den Nachteil i) nicht. Unter Umständen kann der Nachteil b) beim E-Kanal auftreten, falls das E-Bit in ähnlicher Form für andere Zwecke genutzt würde.

### Synchronisiernachricht bzw. Synchronisiersignal

Da für das Senden der Synchronisiernachricht von der Basisstation A-BS (MASTER-Station) der D-Kanal verwendet wird, muß das Synchronisiersignal auch die Basiskonventionen für den Schicht-2-Nachrichtenrahmen erfüllen.

Vorgeschlagen wird hier die Verwendung eines sogenannten UI-Rahmens (**U**numbered **I**nformation) des D-Kanal-Schicht-2-Protokolls (LAP-D) [vgl. FIGUR 13 in Verbindung mit der Druckschrift: Nachrichtentechnik Elektronik, Berlin; "Schnittstellen der Telekommunkation" Teil 4; 41(1991),Heft 6, Seiten 220 bis 222 und 42(1992), Heft 1, Seiten 19 und 20], der im wesentlichen durch ein noch festzulegendes SAPI-Octett (**S**ervice **A**ccess **P**oint **I**dentifier) gekennzeichnet ist.

Der SAPI-Code muß von den zuständigen internationalen Standardisierungsinstitutionen ETSI und ITU (früher CCITT) aus dem heute reservierten Wertebereich festgelegt werden.

Im Prinzip könnte ein anwendungsspezifischer SAPI-Wert definiert werden. Es könnte aber auch ein solcher Wert für lokale Anwendungen, z.B.wie die vorliegende definiert werden. Im letzteren Fall kann die Diskriminierung von anderen Anwendungen nach bekannten Verfahren innerhalb des Datenfeldes vorgenommen werden.

Die Schicht-2-Konvention erlaubt ein Datenfeld von max. 260 Octetts. Das Synchronisiersignal kann damit einen Zeitraum bis zu ca. 130 ms, d.h. viele Funkrahmen überdecken. Als zeitlich eng begrenzter auslösender Triggerzeitpunkt bietet sich das Ende des Schicht-2-Rahmens an, in dem die Synchronisierung vorher aktiviert wurde oder sonstige vereinbarte Octetts oder Bits im Datenfeld.

Die empfangsseitige Auswertung der gesendeten Datensicherungsinformation erscheint im E-Kanal nicht erforderlich, da der S₀-Bus selbst als ausreichend betriebssicher anzusehen ist sowie keine prozeduralen Maßnahmen außer dem "Mitlesen" durch die MASTER-Station und deren Reaktion vorgesehen sind.

## Patentansprüche

1. Zellulares Schnurlos-Telekommunikationssystem mit
**(a)** einer Vielzahl von Schnurlos-Basisstationen (A-BS, B-BS, C-BS), die in Funkzellen des zellularen Schnurlos-Telekommunikationssystems angeordnet und mit einer drahtgebundenen Vermittlungseinrichtung (DOVST, PABX) für eine zellenübergreifende oder interzellulare Telekommunikation verbunden sind, wobei
**(a1)** die Vermittlungseinrichtung (DOVST, PABX) mindestens eine S₀-Schnittstelle (NT) aufweist und
**(a2)** die Schnurlos-Basisstationen (A-BS, B-BS, C-BS) jeweils Mittel (FFB, SB, DEB, MIP, PGM, ISB, AE, ZEM) zum Herstellen einer zellenübergreifenden oder interzellularen Telekommunikationsverbindung mit einer nach dem ISO/OSI-Schichtenmodell aufgebauten S₀-Sendestufe (SES, SE_{D}) und einer nach dem ISO/OSI-Schichtenmodell S₀-Empfangsstufe (EMS, EE_{D}, EE_{E}) aufweisen, die über einen zwei B-Kanäle und einen D-Kanal aufweisenden S₀-Bus an der S₀-Schnittstelle (NT) angeschlossen sind,
**(b)** mindestens einem Schnurlos-Mobilteil (MTₐ...MT_{f}), das mit den Schnurlos-Basisstationen (A-BS, B-BS, C-BS) telekommunikationsfähig ist,
**dadurch gekennzeichnet,** daß
**(c)** die Schnurlos-Basisstationen (A-BS, B-BS, C-BS) in einer Master-Slave-Konfiguration, bestehend aus einer Master-Schnurlos-Basisstation (A-BS) und mindestens einer Slave-Schnurlos-Basisstation (B-BS, C-BS), an die S₀-Schnittstelle (NT) der Vermittlungseinrichtung (DOVST, PABX) angeschlossen sind,
**(d)** die Master-Schnurlos-Basisstation (A-BS) und die Slave-Schnurlos-Basisstation/en (B-BS, C-BS) bezüglich der Mittel (FFB, SB, DEB, MIP, PGM, ISB, AE, ZEM) derart ausgebildet sind, daß nach dem Aufbau der Schicht 1 der S₀-Sendestufe (SES, SE_{D}) und der S₀-Empfangsstufe (EMS, EE_{D}, EE_{E}) gemäß dem ISO/OSI-Schichtenmodell eine Synchronisiernachricht im Rahmen einer lokalen Querkommunikation zwischen den an der S₀-Schnittstelle (NT) angeschlossen Schnurlos-Basisstationen (A-BS, B-BS, C-BS) auf dem S₀-Bus von der Master-Schnurlos-Basisstation (A-BS) an die Slave-Schnurlos-Basisstation/en (B-BS, C-BS) übertragen wird.

2. Zellulares Schnurlos-Telekommunikationssystem mit
**(a)** einer Vielzahl von Schnurlos-Basisstationen (A-BS, B-BS, C-BS), die in Funkzellen des zellularen Schnurlos-Telekommunikationssystems angeordnet und mit einer drahtgebundenen Vermittlungseinrichtung (DOVST, PABX) für eine zellenübergreifende oder interzellulare Telekommunikation verbunden sind, wobei
**(a1)** die Vermittlungseinrichtung (DOVST, PABX) mindestens eine S₀-Schnittstelle (NT) aufweist und
**(a2)** die Schnurlos-Basisstationen (A-BS, B-BS, C-BS) jeweils Mittel (FFB, SB, DEB, MIP, PGM, ISB, AE, ZEM) zum Herstellen einer zellenübergreifenden oder interzellularen Telekommunikationsverbindung mit einer nach dem ISO/OSI-Schichtenmodell aufgebauten S₀-Sendestufe (SES, SE_{D}) und einer nach dem ISO/OSI-Schichtenmodell S₀-Empfangsstufe (EMS, EE_{D}, EE_{E}) aufweisen, die über einen zwei B-Kanäle und einen D-Kanal aufweisenden S₀-Bus an der S₀-Schnittstelle (NT) angeschlossen sind,
**(b)** mindestens einem Schnurlos-Mobilteil (MTₐ...MT_{f}), das mit den Schnurlos-Basisstationen (A-BS, B-BS, C-BS) telekommunikationsfähig ist,
**dadurch gekennzeichnet,** daß
**(c)** die Vermittlungseinrichtung (DOVST, PABX) in einer Art und Weise ausgebildet ist, die dem Euro-ISDN-Standard vergleichbar ist,
**(d)** die Schnurlos-Basisstationen (A-BS, B-BS, C-BS) in einer Master-Slave-Konfiguration, bestehend aus einer Master-Schnurlos-Basisstation (B-BS) und mindestens einer Slave-Schnurlos-Basisstation (A-BS, C-BS), an die S₀-Schnittstelle (NT) der Vermittlungseinrichtung (DOVST, PABX) angeschlossen sind, wobei zwischen der Master-Schnurlos-Basisstation (B-BS) und einem ersten Schnurlos-Mobilteil (MT_{c}) eine erste Funkverbindung als Telekommunikationsverbindung im Rahmen der zellenübergreifenden oder interzellularen Telekommunikation aufgebaut ist,
**(e)** das erste Schnurlos-Mobilteil (MT_{c}) derart ausgebildet ist, daß im Hintergrund eine zweite Funkverbindung zu einer zweiten Schnurlos-Basisstation (A-BS) aufgebaut wird, die als Telekommunikationsverbindung in spe im Rahmen der zellenübergreifenden oder interzellularen Telekommunikation dient,
**(f)** das die Vermittlungseinrichtung (DOVST, PABX) das Dienstmerkmal "Endgeräteportabilität" aufweist,
**(g)** die Mittel (FFB, SB, DEB, MIP, PGM, ISB, AE, ZEM) zum Herstellen der zellenübergreifenden oder interzellularen Telekommunikationsverbindung sowie die Vermittlungseinrichtung (DOVST, PABX) derart ausgebildet sind, daß, wenn die Funkqualität der zweiten Funkverbindung besser oder gleich der Funkqualität der ersten Funkverbindung ist, unter Ausnutzung des in der Vermittlungseinrichtung (DOVST, PABX) verfügbaren Dienstmerkmales "Endgeräteportabilität" die zweite Funkverbindung als neue Telekommunikationsverbindung im Rahmen der zellenübergreifenden oder interzellularen Telekommunikation dient.

3. Zellulares Schnurlos-Telekommunikationssystem mit
**(a)** einer Vielzahl von Schnurlos-Basisstationen (A-BS, B-BS, C-BS), die in Funkzellen des zellularen Schnurlos-Telekommunikationssystems angeordnet und mit einer drahtgebundenen Vermittlungseinrichtung (DOVST, PABX) für eine zellenübergreifende oder interzellulare Telekommunikation verbunden sind, wobei
**(a1)** die Vermittlungseinrichtung (DOVST, PABX) mindestens eine S₀-Schnittstelle (NT) aufweist und
**(a2)** die Schnurlos-Basisstationen (A-BS, B-BS, C-BS) jeweils Mittel (FFB, SB, DEB, MIP, PGM, ISB, AE, ZEM) zum Herstellen einer zellenübergreifenden oder interzellularen Telekommunikationsverbindung mit einer nach dem ISO/OSI-Schichtenmodell aufgebauten S₀-Sendestufe (SES, SE_{D}) und einer nach dem ISO/OSI-Schichtenmodell S₀-Empfangsstufe (EMS, EE_{D}, EE_{E}) aufweisen, die über einen zwei B-Kanäle und einen D-Kanal aufweisenden S₀-Bus an der S₀-Schnittstelle (NT) angeschlossen sind,
**(b)** mindestens einem Schnurlos-Mobilteil (MTₐ...MT_{f}), das mit den Schnurlos-Basisstationen (A-BS, B-BS, C-BS) telekommunikationsfähig ist,
**dadurch gekennzeichnet**, daß
**(c)** die Schnurlos-Basisstationen (A-BS, B-BS, C-BS) in einer Master-Slave-Konfiguration, bestehend aus einer Master-Schnurlos-Basisstation (B-BS) und mindestens einer Slave-Schnurlos-Basisstation (A-BS, C-BS), an die S₀-Schnittstelle (NT) der Vermittlungseinrichtung (DOVST, PABX) angeschlossen sind, wobei zwischen der Master-Schnurlos-Basisstation (B-BS) und einem ersten Schnurlos-Mobilteil (MT_{c}) eine erste Funkverbindung als Telekommunikationsverbindung im Rahmen der zellenübergreifenden oder interzellularen Telekommunikation aufgebaut ist,
**(d)** das erste Schnurlos-Mobilteil (MT_{c}) derart ausgebildet ist, daß im Hintergrund eine zweite Funkverbindung zu einer zweiten Schnurlos-Basisstation (A-BS) aufgebaut wird, die als Telekommunikationsverbindung in spe im Rahmen der zellenübergreifenden oder interzellularen Telekommunikation dient,
**(e)** die Master-Schnurlos-Basisstation (B-BS) und die Slave-Schnurlos-Basisstation/en (A-BS, C-BS) bezüglich der Mittel (FFB, SB, DEB, MIP, PGM, ISB, AE, ZEM) derart ausgebildet sind, daß eine handover-relevante Nachricht im Rahmen einer lokalen Querkommunikation zwischen den an der S₀-Schnittstelle (NT) angeschlossen Schnurlos-Basisstationen (A-BS, B-BS, C-BS) auf dem S₀-Bus von der Master-Schnurlos-Basisstation (B-BS) an die Slave-Schnurlos-Basisstation/en (A-BS, C-BS) übertragen wird.

4. Zellulares Schnurlos-Telekommunikationssystem nach Anspruch 1, **dadurch gekennzeichnet**, daß
die Mittel (FFB, SB, DEB, MIP, PGM, ISB, AE, ZEM) der Slave-Schnurlos-Basisstationen (B-BS, C-BS) derart ausgebildet sind, daß die empfangene Synchronisiernachricht ausgewertet wird und die Slave-Schnurlos-Basisstationen (B-BS, C-BS) sich nach dieser Auswertung abrupt oder kontinuierlich mit der Master-Schnurlos-Basisstation (A-BS) synchronisieren können.

5. Zellulares Schnurlos-Telekommunikationssystem nach Anspruch 1 oder 4, **dadurch gekennzeichnet**, daß
die Master-Schnurlos-Basisstation (A-BS) von den an der S₀--Schnittstelle (NT) angeschlossenen Schnurlos-Basisstationen (A-BS, B-BS, C-BS) diejenige ist, bei der nach dem Aufbau der Schicht 1 aufgrund einer interzellularen Telekommunikationsanforderung zuerst weitere Schichten der S₀-Sendestufe (SES, SE_{D}) und der S₀-Empfangsstufe (EMS, EE_{D}, EE_{E}) gemäß dem ISO/OSI-Schichtenmodell aufgebaut werden.

6. Zellulares Schnurlos-Telekommunikationssystem nach einem der Ansprüche 1, 4 oder 5, **dadurch gekennzeichnet**, daß die Master-Schnurlos-Basisstation (A-BS) bezüglich der Mittel (FFB, SB, DEB, MIP, PGM, ISB, AE, ZEM) derart ausgebildet ist, daß die von der Master-Schnurlos-Basisstation (A-BS) gesendete Synchronisiernachricht auch von dieser empfangen und ausgewertet wird.

7. Zellulares Schnurlos-Telekommunikationssystem nach einem der Ansprüche 1 oder 4 bis 6, **dadurch gekennzeichnet**, daß
die Synchronisiernachricht im D-Kanal des S₀-Bus und anschließend gemäß einer in der S₀-Schnittstelle (NT) realisierten Echofunktion in einem E-Kanal übertragen wird.

8. Zellulares Schnurlos-Telekommunikationssystem nach einem der Ansprüche 1 oder 4 bis 7, **dadurch gekennzeichnet**, daß
die Synchronisiernachricht in dem für die zellenübergreifende oder interzellulare Telekommunikation benutzten B-Kanal des S₀-Bus übertragen wird, indem in dem B-Kanal übertragene Nutzdaten durch die Synchronisiernachricht in einem vorgegebenen Umfang ersetzt werden.

9. Zellulares Schnurlos-Telekommunikationssystem nach einem der Ansprüche 1 oder 4 bis 8, **dadurch gekennzeichnet**, daß
die Synchronisiernachricht im D-Kanal des S₀-Bus in Form von Paketdaten übertragen wird.

10. Zellulares Schnurlos-Telekommunikationssystem nach Anspruch 7, **dadurch gekennzeichnet,** daß
die Synchronisiernachricht im Datenfeld eines Datenrahmens nach dem LAP-D-Protokoll enthalten ist.

11. Zellulares Schnurlos-Telekommunikationssystem nach Anspruch 8, **dadurch gekennzeichnet,** daß
die im B-Kanal übertragenen Nutzdaten durch die Synchronisiernachricht in dem Umfang ersetzt wird, wie die Übertragungsqualität im B-Kanal durch Verschlechterung des Störabstandes im B-Kanal nur unwesentlich verschlechtert wird.

12. Zellulares Schnurlos-Telekommunikationssystem nach Anspruch 11, **dadurch gekennzeichnet,** daß
jeweils das letzte Bit eines jeden vierten PCM-Oktetts der im B-Kanal übertragenen Nutzdaten durch die Synchronisiernachricht ersetzt wird.

13. Zellulares Schnurlos-Telekommunikationssystem nach Anspruch 9, 11 oder 12, **dadurch gekennzeichnet,** daß
die Synchronisiernachricht im B-Kanal in einem Datenpaket übertragen wird, das bezüglich der Paketstruktur einem HDLC-Datenpaket ähnlich ist.

14. Zellulares Schnurlos-Telekommunikationssystem nach Anspruch 8 oder 11 bis 13, **dadurch gekennzeichnet,** daß
die Mittel (FFB, SB, DEB, MIP, PGM, ISB, AE, ZEM) eine Empfangseinrichtung (ZEM) aufweisen, die parallel zu der S₀-Sendestufe (SES, SE_{D}) an den S₀-Bus geschaltet ist.

15. Zellulares Schnurlos-Telekommunikationssystem nach einem der Ansprüche 1 oder 4 bis 14, **dadurch gekennzeichnet**, daß
die Mittel (FFB, SB, DEB, MIP, PGM, ISB, AE, ZEM) für den Empfang und für die Auswertung der gesendeten Synchronisiernachricht derart ausgebildet sind, daß in "Echtzeit" die Synchronisiernachricht erkannt und ein Triggersignal aus der Synchronisiernachricht abgeleitet wird.

16. Zellulares Schnurlos-Telekommunikationssystem nach einem der Ansprüche 1 oder 4 bis 15, **dadurch gekennzeichnet**, daß
die Mittel (FFB, SB, DEB, MIP, PGM, ISB, AE, ZEM) derart ausgebildet sind, daß für jede an die S₀-Schnittstelle (NT) angeschlossene Schnurlos-Basisstation (A-BS, B-BS, C-BS) einmalig oder fortlaufend
**(a)** ein erster, die Übertragung eines Datenrahmens nach dem LAP-D-Protokoll einleitender Datensatz erkannt wird,
**(b)** aus einem dem ersten Datensatz nachfolgenden zweiten Datensatz des Datenrahmens ein busbezogenes Datenwort nach einer allen Schnurlos-Basisstationen (A-BS, B-BS, C-BS) einheitlich vorgegebenen Generierungsvorschrift erzeugt wird,
**(c)** die basisstationsindividuelle Zeitspanne zwischen dem Startzeitpunkt eines für die kanalbezogene Schnurlosübertragung in der Funkzelle zyklisch auftretenden Funkzeitrahmens und der Zeitpunkt der Erzeugung des busbezogenen Datenwortes in Form eines basisstationsindividuellen funkbezogenen Datenwortes erfaßt wird,
**(d)** aus dem busbezogenen Datenwort und dem basisstationsindividuellen funkbezogenen Datenwort eine basisstationsindividuelle Synchronisationssignatur gebildet und-gespeichert wird, die das S₀-Bus-Timing mit dem basisstationsindividuellen Funk-Timing verknüpft.

17. Zellulares Schnurlos-Telekommunikationssystem nach Anspruch 16, **dadurch gekennzeichnet**, daß
der Generierungsvorschrift die bei der Bildung von CRC-Werten verwendete Polynomendivision zugrundeliegt.

18. Zellulares Schnurlos-Telekommunikationssystem nach Anspruch 16 oder 17, **dadurch gekennzeichnet**, daß
die Synchronisiernachricht als Master-Synchronisationssignatur ausgebildet ist, die der Synchronisationssignatur der Master-Schnurlos-Basisstation (A-BS) entspricht.

19. Zellulares Schnurlos-Telekommunikationssystem nach Anspruch 18, **dadurch gekennzeichnet**, daß
die Mittel (FFB, SB, DEB, MIP, PGM, ISB, AE, ZEM) zum Herstellen der interzellularen Telekommunikationsverbindung derart ausgebildet sind, daß
**(a)** ein mit der empfangenen Master-Synchronisationssignatur übermitteltes funkbezogenes Master-Datenwort mit dem korrespondierenden in der empfangenden Slave-Schnurlos-Basisstation (B-BS, C-BS) gespeicherten funkbezogenen Datenwort verglichen wird,
**(b)** bei einer festgestellten Differenz zwischen den zu vergleichenden Datenwörtern der durch das funkbezogene Datenwort der empfangenden Slave-Schnurlos-Basisstation angegebene Startzeitpunkt des Funkzeitrahmens entsprechend der festgestellten Differenz korrigiert wird.

20. Zellulares Schnurlos-Telekommunikationssystem nach einem der Ansprüche 1 oder 4 bis 19, **dadurch gekennzeichnet**, daß
die Vermittlungseinrichtung (DOVST, PABX) in einer Art und Weise ausgebildet ist, die dem Euro-ISDN-Standard vergleichbar ist.

21. Zellulares Schnurlos-Telekommunikationssystem nach Anspruch 20, **dadurch gekennzeichnet**, daß
**(a)** die Schnurlos-Basisstationen (A-BS, B-BS, C-BS) in einer Master-Slave-Konfiguration, bestehend aus einer Master-Schnurlos-Basisstation (B-BS) und mindestens einer Slave-Schnurlos-Basisstation (A-BS, C-BS), an die S₀-Schnittstelle (NT) der Vermittlungseinrichtung (DOVST, PABX) angeschlossen sind, wobei zwischen der Master-Schnurlos-Basisstation (B-BS) und einem ersten Schnurlos-Mobilteil (MT_{c}) eine erste Funkverbindung als Telekommunikationsverbindung im Rahmen der zellenübergreifenden oder interzellularen Telekommunikation aufgebaut ist,
**(b)** das erste Schnurlos-Mobilteil (MT_{c}) derart ausgebildet ist, daß im Hintergrund eine zweite Funkverbindung zu einer zweiten Schnurlos-Basisstation (A-BS) aufgebaut wird, die als Telekommunikationsverbindung in spe im Rahmen der zellenübergreifenden oder interzellularen Telekommunikation dient,
**(c)** das die Vermittlungseinrichtung (DOVST, PABX) das Dienstmerkmal "Endgeräteportabilität" aufweist,
**(d)** die Mittel (FFB, SB, DEB, MIP, PGM, ISB, AE, ZEM) zum Herstellen der zellenübergreifenden oder interzellularen Telekommunikationsverbindung sowie die Vermittlungseinrichtung (DOVST, PABX) derart ausgebildet sind, daß, wenn die Funkqualität der zweiten Funkverbindung besser oder gleich der Funkqualität der ersten Funkverbindung ist, unter Ausnutzung des in der Vermittlungseinrichtung (DOVST, PABX) verfügbaren Dienstmerkmales "Endgeräteportabilitat" die zweite Funkverbindung als neue Telekommunikationsverbindung im Rahmen der zellenübergreifenden oder interzellularen Telekommunikation dient.

22. Zellulares Schnurlos-Telekommunikationssystem nach einem der Ansprüche 1 oder 4 bis 19, **dadurch gekennzeichnet**, daß
**(a)** die Schnurlos-Basisstationen (A-BS, B-BS, C-BS) in einer Master-Slave-Konfiguration, bestehend aus einer Master-Schnurlos-Basisstation (B-BS) und mindestens einer Slave-Schnurlos-Basisstation (A-BS, C-BS), an die S₀-Schnittstelle (NT) der Vermittlungseinrichtung (DOVST, PABX) angeschlossen sind, wobei zwischen der Master-Schnurlos-Basisstation (B-BS) und einem ersten Schnurlos-Mobilteil (MT_{c}) eine erste Funkverbindung als Telekommunikationsverbindung im Rahmen der zellenübergreifenden oder interzellularen Telekommunikation aufgebaut ist,
**(b)** das erste Schnurlos-Mobilteil (MT_{c}) derart ausgebildet ist, daß im Hintergrund eine zweite Funkverbindung zu einer zweiten Schnurlos-Basisstation (A-BS) aufgebaut wird, die als Telekommunikationsverbindung in spe im Rahmen der zellenübergreifenden oder interzellularen Telekommunikation dient,
**(c)** die Master-Schnurlos-Basisstation (B-BS) und die Slave-Schnurlos-Basisstation/en (A-BS, C-BS) bezüglich der Mittel (FFB, SB, DEB, MIP, PGM, ISB, AE, ZEM) derart ausgebildet sind, daß eine handover-relevante Nachricht im Rahmen einer lokalen Querkommunikation zwischen den an der S₀-Schnittstelle (NT) angeschlossen Schnurlos-Basisstationen (A-BS, B-BS, C-BS) auf dem S₀-Bus von der Master-Schnurlos-Basisstation (B-BS) an die Slave-Schnurlos-Basisstation/en (A-BS, C-BS) übertragen wird.

23. Zellulares Schnurlos-Telekommunikationssystem nach Anspruch 22, **dadurch gekennzeichnet**, daß
die Master-Schnurlos-Basisstation (B-BS) bezüglich der Mittel (FFB, SB, DEB, MIP, PGM, ISB, AE, ZEM) derart ausgebildet ist, daß die von der Master-Schnurlos-Basisstation (B-BS) gesendete Nachricht auch von dieser empfangen und ausgewertet wird.

24. Zellulares Schnurlos-Telekommunikationssystem nach Anspruch 22 oder 23, **dadurch gekennzeichnet,** daß
die Nachricht im D-Kanal des S₀-Bus () und anschließend gemäß einer in der S₀-Schnittstelle (NT) realisierten Echofunktion in einem E-Kanal übertragen wird.

25. Zellulares Schnurlos-Telekommunikationssystem nach einem der Ansprüche 22 bis 24, **dadurch gekennzeichnet**, daß
die Nachricht in dem für die zellenübergreifende oder interzellulare Telekommunikation benutzten B-Kanal des S₀-Bus übertragen wird, indem in dem B-Kanal übertragene Nutzdaten durch die Nachricht in einem vorgegebenen Umfang ersetzt werden.

26. Zellulares Schnurlos-Telekommunikationssystem nach einem der Ansprüche 22 bis 25, **dadurch gekennzeichnet**, daß
die Nachricht im D-Kanal des S₀-Bus in Form von Paketdaten übertragen wird.

27. Zellulares Schnurlos-Telekommunikationssystem nach Anspruch 24, **dadurch gekennzeichnet**, daß
die Nachricht im Datenfeld eines Datenrahmens nach dem LAP-D-Protokoll enthalten ist.

28. Zellulares Schnurlos-Telekommunikationssystem nach Anspruch 25, **dadurch gekennzeichnet**, daß
die im B-Kanal übertragenen Nutzdaten durch die Nachricht in dem Umfang ersetzt wird, wie die Übertragungsqualität im B-Kanal durch Verschlechterung des Störabstandes im B-Kanal nur unwesentlich verschlechtert wird.

29. Zellulares Schnurlos-Telekommunikationssystem nach Anspruch 28, **dadurch gekennzeichnet**, daß
jeweils das letzte Bit eines jeden vierten PCM-Oktetts der im B-Kanal übertragenen Nutzdaten durch die Nachricht ersetzt wird.

30. Zellulares Schnurlos-Telekommunikationssystem nach Anspruch 25, 26 oder 29, **dadurch gekennzeichnet**, daß
die Nachricht im B-Kanal in einem Datenpaket übertragen wird, das bezüglich der Paketstruktur einem HDLC-Datenpaket ähnlich ist.

31. Zellulares Schnurlos-Telekommunikationssystem nach Anspruch 25 oder 28 bis 30, **dadurch gekennzeichnet**, daß
die Mittel (FFB, SB, DEB, MIP, PGM, ISB, AE, ZEM) eine Empfangseinrichtung (ZEM) aufweisen, die parallel zu der S₀-Sendestufe (SES, SE_{D}) an den S₀-Bus geschaltet ist.

32. Zellulares Schnurlos-Telekommunikationssystem nach einem der Ansprüche 22 bis 31, **dadurch gekennzeichnet**, daß
die Mittel (FFB, SB, DEB, MIP, PGM, ISB, AE, ZEM) für den Empfang und für die Auswertung der gesendeten Nachricht derart ausgebildet sind, daß in "Echtzeit" mit der Nachricht übertragene handover-relevante Informationen erkannt und für ein nahezu unterbrechungsfreies Handover ausgenutzt werden.

33. Zellulares Schnurlos-Telekommunikationssystem nach Anspruch 32, **dadurch gekennzeichnet**, daß
die handover-relevanten Informationen telekommunikationsspezifische Kennungen, insbesondere die Kennungen TEI, RFPI, IPUI, B-Kanal etc., enthalten.

34. Zellulares Schnurlos-Telekommunikationssystem nach einem der Ansprüche 1 bis 33, **dadurch gekennzeichnet**, daß
die Vermittlungseinrichtung (DOVST, PABX) als Digitale Ortsvermittlungsstelle (DVOST) mit vorgeschaltetem Netzabschluß (NT) ausgebildet ist.

35. Zellulares Schnurlos-Telekommunikationssystem nach einem der Ansprüche 1 bis 33, **dadurch gekennzeichnet**, daß
die Vermittlungseinrichtung (DOVST, PABX) als private Vermittlungsanlage (PABX) ausgebildet ist.

## Claims

1. Cellular cordless telecommunications system having
**(a)** a large number of cordless base stations (A-BS, B-BS, C-BS) which are arranged in radio cells in the cellular cordless telecommunications system and are connected to a wire-based switching centre (DOVST, PABX) for intercellular telecommunications or telecommunications between cells,
**(a1)** the switching centre (DOVST, PABX) having at least one S₀ interface (NT), and
**(a2)** the cordless base stations (A-BS, B-BS, C-BS) each having means (FFB, SB, DEB, MIP, PGM, ISB, AE, ZEM) for producing an intercellular telecommunications link or a telecommunications link between cells with an S₀ transmitting stage (SES, SE_{D}) constructed in accordance with the ISO/OSI layer model and with an S₀ receiving stage (EMS, EE_{D}, EE_{E}) in accordance with the ISO/OSI layer model, which stages are connected to the S₀ interface (NT) via an S₀ bus having two B channels and one D channel,
**(b)** at least one cordless mobile unit (MTₐ...MT_{f}) which is capable of telecommunications with the cordless base stations (A-BS, B-BS, C-BS),
**characterized in that**
**(c)** the cordless base stations (A-BS, B-BS, C-BS), in a master-slave configuration comprising a master cordless base station (A-BS) and at least one slave cordless base station (B-BS, C-BS), are connected to the S₀ interface (NT) of the switching centre (DOVST, PABX),
**(d)** the master cordless base station (A-BS) and the slave cordless base station or stations (B-BS, C-BS) are designed in terms of the means (FFB, SB, DEB, MIP, PGM, ISB, AE, ZEM) in such a manner that, once layer 1 of the S₀ transmitting stage (SES, SE_{D}) and of the S₀ receiving stage (EMS, EE_{D}, EE_{E}) has been set up in accordance with the ISO/OSI layer model, a synchronization message is transmitted (in the course of local intercommunication) between the cordless base stations (A-BS, B-BS, C-BS) connected to the S₀ interface (NT), on the S₀ bus from the master cordless base station (A-BS) to the slave cordless base station or stations (B-BS, C-BS).

2. Cellular cordless telecommunications system having
**(a)** a large number of cordless base stations (A-BS, B-BS, C-BS) which are arranged in radio cells in the cellular cordless telecommunications system and are connected to a wire-based switching centre (DOVST, PABX) for intercellular telecommunications or telecommunications between cells,
**(a1)** the switching centre (DOVST, PABX) having at least one S₀ interface (NT), and
**(a2)** the cordless base stations (A-BS, B-BS, C-BS) each having means (FFB, SB, DEB, MIP, PGM, ISB, AE, ZEM) for producing an intercellular telecommunications link or a telecommunications link between cells with an S₀ transmitting stage (SES, SE_{D}) constructed in accordance with the ISO/OSI layer model and with an S₀ receiving stage (EMS, EE_{D}, EE_{E}) in accordance with the ISO/OSI layer model, which stages are connected to the S₀ interface (NT) via an S₀ bus having two B channels and one D channel,
**(b)** at least one cordless mobile unit (MTₐ...MT_{f}) which is capable of telecommunications with the cordless base stations (A-BS, B-BS, C-BS),
**characterized in that**
**(c)** the switching centre (DOVST, PABX) is designed in a manner which is comparable with the Euro-ISDN Standard,
**(d)** the cordless base stations (A-BS, B-BS, C-BS) in a master-slave configuration comprising a master cordless base station (B-BS) and at least one slave cordless base station (A-BS, C-BS), are connected to the S₀ interface (NT) of the switching centre (DOVST, PABX), a first radio link being set up between the master cordless base station (B-BS) and a first cordless mobile unit (Mt_{c}) as a telecommunications link in the course of intercellular telecommunications or telecommunications between cells,
**(e)** the first cordless mobile unit (MT_{c}) is designed in such a manner that a second radio link to a second cordless base station (A-BS) is set up in the background and is intended to be used as a telecommunications link in the course of intercellular telecommunications or telecommunications between cells,
**(f)** the switching centre (DOVST, PABX) has the service feature "terminal portability",
**(g)** the means (FFB, SB, DEB, MIP, PGM, ISB, AE, ZEM) for producing the intercellular telecommunications link or telecommunications link between cells as well as the switching centre (DOVST, PABX) are designed in such a manner that, if the radio quality of the second radio link is better than or equal to the radio quality of the first radio link, the service feature "terminal portability", which is available in the switching centre (DOVST, PABX), is used such that the second radio link serves as a new telecommunications link in the course of the intercellular telecommunications or telecommunications between cells.

3. Cellular cordless telecommunications system having
**(a)** a large number of cordless base stations (A-BS, B-BS, C-BS) which are arranged in radio cells in the cellular cordless telecommunications system and are connected to a wire-based switching centre (DOVST, PABX) for intercellular telecommunications or telecommunications between cells,
**(a1)** the switching centre (DOVST, PABX) having at least one So interface (NT), and
**(a2)** the cordless base stations (A-BS, B-BS, C-BS) each having means (FFB, SB, DEB, MIP, PGM, ISB, AE, ZEM) for producing an intercellular telecommunications link or a telecommunications link between cells with an S₀ transmitting stage (SES, SE_{D}) constructed in accordance with the ISO/OSI layer model and with an S₀ receiving stage (EMS, EE_{D}, EE_{E}) in accordance with the ISO/OSI layer model, which stages are connected to the S₀ interface (NT) via an S₀ bus having two B channels and one D channel,
**(b)** at least one cordless mobile unit (MTₐ...MT_{f}) which is capable of telecommunications with the cordless base stations (A-BS, B-BS, C-BS),
**characterized in that**
**(c)** the cordless base stations (A-BS, B-BS, C-BS) in a master-slave configuration comprising a master cordless base station (B-BS) and at least one slave cordless base station (A-BS, C-BS), are connected to the S₀ interface (NT) of the switching centre (DOVST, PABX), a first radio link being set up between the master cordless base station (B-BS) and a first cordless mobile unit (MT_{c}) in the course of intercellular telecommunications or telecommunications between cells,
**(d)** the first cordless mobile unit (MT_{c}) is designed in such a manner that a second radio link to a second cordless base station (A-BS) is set up in the background and is used as a telecommunications link in the course of intercellular telecommunications or telecommunications between cells,
**(e)** the master cordless base station (B-BS) and the slave cordless base station or stations (A-BS, C-BS) are designed in terms of the means (FFB, SB, DEB, MIP, PGM, ISB, AE, ZEM) in such a manner that a handover-relevant message is transmitted in the course of local intercommunication between the cordless base stations (A-BS, B-BS, C-BS) connected to the S₀ interface (NT), on the S₀ bus from the master cordless base station (B-BS) to the slave cordless base station or stations (A-BS, C-BS).

4. Cellular cordless telecommunications system according to Claim 1, **characterized in that**
the means (FFB, SB, DEB, MIP, PGM, ISB, AE, ZEM) of the slave cordless base stations (B-BS, C-BS) are designed in such a manner that the received synchronization message is evaluated, and the slave cordless base station (B-BS, C-BS) can be synchronized abruptly or continuously to the master cordless base station (A-BS), after this evaluation.

5. Cellular cordless telecommunications system according to Claim 1 or 4, **characterized in that**
the master cordless base station (A-BS) of the cordless base stations (A-BS, B-BS, C-BS) connected to the S₀ interface (NT) is that for which (after setting up layer 1 on the basis of an intercellular telecommunications request) further layers of the S₀ transmitting stage (SES, SE_{D}) and of the S₀ receiving stage (EMS, EE_{D}, EE_{E}) are set up first in accordance with the ISO/OSI layer model.

6. Cellular cordless telecommunications system according to Claims 1, 4 or 5 **characterized in that**
the master cordless base station (A-BS) is designed in terms of the means (FFB, SB, DEB, MIP, PGM, ISB, AE, ZEM) in such a manner that the synchronization message transmitted by the master cordless base station (A-BS) is also received and evaluated by it.

7. Cellular cordless telecommunications system according to one of Claims 1 or 4 to 6, **characterized in that**
the synchronization message is transmitted in the D channel of the S₀ bus and subsequently, in accordance with an echo function implemented in the S₀ interface (NT), in an E channel.

8. Cellular cordless telecommunications system according to one of Claims 1 or 4 to 7, **characterized in that**
the synchronization message is transmitted in the B channel of the S₀ bus, which B channel is used for intercellular telecommunications or telecommunications between cells, in that wanted data transmitted in the B channel are replaced to a predetermined extent by the synchronization message.

9. Cellular cordless telecommunications system according to one of Claims 1 or 4 to 8, **characterized in that**
the synchronization message is transmitted in the D channel of the S₀ bus in the form of packet data.

10. Cellular cordless telecommunications system according to Claim 7, **characterized in that**
the synchronization message is contained in the data field of a data frame in accordance with the LAP-D protocol.

11. Cellular cordless telecommunications system according to Claim 8, **characterized in that**
the wanted data transmitted in the B channel are replaced by the synchronization message to the extent that the transmission quality in the B channel is reduced only insignificantly by a reduction in the signal-to-noise ratio in the B channel.

12. Cellular cordless telecommunications system according to Claim 11, **characterized in that**
the last bit of every fourth PCM octet of the wanted data transmitted in the B channel is in each case replaced by the synchronization message.

13. Cellular cordless telecommunications system according to Claim 9, 11 or 12, **characterized in that**
the synchronization message is transmitted in the B channel in a data packet which, in terms of the packet structure, is similar to an HDLC data packet.

14. Cellular cordless telecommunications system according to Claim 8 or 11 to 13, **characterized in that**
the means (FFB, SB, DEB, MIP, PGM, ISB, AE, ZEM) have a receiving device (ZEM) which is connected to the S₀ bus in parallel with S₀ transmitting stage (SES, SE_{D}).

15. Cellular cordless telecommunications system according to one of Claims 1 or 4 to 14, **characterized in that**
the means (FFB, SB, DEB, MIP, PGM, ISB, AE, ZEM) for reception and for evaluation of the transmitted synchronization message are designed in such a manner that the synchronization message is identified and a trigger signal is derived from the synchronization message in "real time".

16. Cellular cordless telecommunications system according to one of Claims 1 or 4 to 15, **characterized in that**
the means (FFB, SB, DEB, MIP, PGM, ISB, AE, ZEM) are designed in such a manner that, for each cordless base station (A-BS, B-BS, C-BS) connected to the S₀ interface (NT), once or continuously,
**(a)** a first data set is identified which initiates transmission of a data frame in accordance with the LAP-D protocol,
**(b)** a bus-related data word is produced from a second data set in the data frame, following the first data set, in accordance with a predetermined generation rule which is predetermined in a standard manner for all the cordless base stations (A-BS, B-BS, C-BS),
**(c)** the base-station-specific time interval between the starting time of a radio time frame which occurs cyclically for channel related cordless transmission in the radio cell and the time of production of the bus-related data word is detected in the form of a base-station-specific, radio-related data word,
**(d)** a base-station-specific synchronization signature is formed from the bus-related data word and from the base-station-specific, radio-related data word, is stored and links the S₀ bus timing to the base-station-specific radio timing.

17. Cellular cordless telecommunications system according to Claim 16, **characterized in that**
the generation rule is based on the polynomial division used to form CRC values.

18. Cellular cordless telecommunications system according to Claim 16 or 17, **characterized in that**
the synchronization message is formed as a master synchronization signature, which corresponds to the synchronization signature of the master cordless base station (A-BS).

19. Cellular cordless telecommunications system according to Claim 18, **characterized in that**
the means (FFB, SB, DEB, MIP, PGM, ISB, AE, ZEM) for producing the intercellular telecommunications link are designed in such a manner that
**(a)** a radio-related master data word which is transmitted with the received master synchronization signature is compared with the corresponding radio-related data word stored in the receiving slave cordless base station (B-BS, C-BS),
**(b)** if a difference is found between the data word to be compared, the starting time of the radio time frame indicated by the radio-related data word of the receiving slave cordless based station is corrected in a corresponding manner to the difference found.

20. Cellular cordless telecommunications system according to one of Claims 1 or 4 to 19, **characterized in that**
the switching centre (DOVST, PABX) is designed in a manner which is comparable to the Euro-ISDN Standard.

21. Cellular cordless telecommunications system according to Claim 20, **characterized in that**
**(a)** the cordless base stations (A-BS, B-BS, C-BS) in a master-slave configuration comprising a master cordless base station (B-BS) and at least one slave cordless base station (A-BS, C-BS), are connected to the S₀ interface (NT) of the switching centre (DOVST, PABX), a first radio link being set up between the master cordless base station (B-BS) and a first cordless mobile unit (MT_{c}) in the course of intercellular telecommunications or telecommunications between cells,
**(b)** the first cordless mobile unit (MT_{c}) is designed in such a manner that a second radio link to a second cordless base station (A-BS) is set up in the background and is intended to be used as a telecommunications link in the course of intercellular telecommunications or telecommunications between cells,
**(c)** the switching centre (DOVST, PABX) has the service feature "terminal portability",
**(d)** the means (FFB, SB, DEB, MIP, PGM, ISB, AE, ZEM) for producing the intercellular telecommunications link or telecommunications link between cells as well as the switching centre (DOVST, PABX) are designed in such a manner that, if the radio quality of the second radio link is better than or equal to the radio quality of the first radio link, the service feature "terminal portability", which is available in the switching centre (DOVST, PABX), is used such that the second radio link serves as a new telecommunications link in the course of the intercellular telecommunications or telecommunications between cells.

22. Cellular cordless telecommunications system according to Claim 1 or 4 to 19, **characterized in that**
**(a)** the cordless base stations (A-BS, B-BS, C-BS) in a master-slave configuration comprising a master cordless base station (B-BS) and at least one slave cordless base station (A-BS, C-BS), are connected to the S₀ interface (NT) of the switching centre (DOVST, PABX), a first radio link being set up between the master cordless station (B-BS) and the first cordless mobile unit (MT_{c}) in the course of intercellular telecommunications or telecommunications between cells,
**(b)** the first cordless mobile unit (MT_{c}) is designed in such a manner that a second radio link to the second cordless base station (A-BS) is set up in the background and is intended to be used as a telecommunications link in the course of intercellular telecommunications or telecommunications between cells,
**(c)** the master cordless base station (B-BS) and the slave cordless base station or stations (A-BS, C-BS) are designed in terms of the means (FFB, SB, DEB, MIP, PGM, ISB, AE, ZEM) in such manner that a handover-relevant message is transmitted in the course of local intercommunication between the cordless base stations (A-BS, B-BS, C-BS) connected to the S₀ interface (NT), on the S₀ bus from the master cordless base station (B-BS) to the slave cordless base station or stations (A-BS, C-BS).

23. Cellular cordless telecommunications system according to Claim 22, **characterized in that**
the master cordless base station (B-BS) is designed in terms of the means (FFB, SB, DEB, MIP, PGM, ISB, AE, ZEM) in such a manner that the message transmitted by the master cordless base station (B-BS) is also received and evaluated by it.

24. Cellular cordless telecommunications system according to Claim 22 or 23, **characterized in that**
the message is transmitted in the D channel of the So bus () and subsequently, in accordance with an echo function implemented in the S₀ interface (NT), in an E channel.

25. Cellular cordless telecommunications system according to one of Claims 22 to 24, **characterized in that**
the message is transmitted in the B channel of the S₀ bus, which B channel is used for intercellular telecommunications or telecommunications between cells, in that wanted data transmitted in the B channel are replaced to a predetermined extent by the message.

26. Cellular cordless telecommunications system according to one of Claims 22 to 25, **characterized in that**
the message is transmitted in the D channel of the S₀ bus in the form of packet data.

27. Cellular cordless telecommunications system according to Claim 24, **characterized in that**
the message is contained in the data field of a data frame in accordance with the LAP-D protocol.

28. Cellular cordless telecommunications system according to Claim 25, **characterized in that**
the wanted data transmitted in the B channel are replaced by the message to the extent that the transmission quality in the B channel is reduced only insignificantly by a reduction in the signal-to-noise ratio in the B channel.

29. Cellular cordless telecommunications system according to Claim 28, **characterized in that**
the last bit of every fourth PCM octet of the wanted data transmitted in the B channel is in each case replaced by the message.

30. Cellular cordless telecommunications system according to Claim 25, 26 or 29, **characterized in that**
the message is transmitted in the B channel in a data packet which, in terms of the packet structure, is similar to an HDLC data packet.

31. Cellular cordless telecommunications system according to Claim 25 or 28 to 30, **characterized in that**
the means (FFB, SB, DEB, MIP, PGM, ISB, AE, ZEM) have a receiving device (ZEM) which is connected to the S₀ bus in parallel with S₀ transmitting stage (SES, SE_{D}).

32. Cellular cordless telecommunications system according to one of Claims 22 to 31, **characterized in that**
the means (FFB, SB, DEB, MIP, PGM, ISB, AE, ZEM) for reception and for evaluation of the transmitted message are designed in such a manner that handover-relevant information transmitted with the message is identified, and is used for virtually interruption-free handover, in "real time".

33. Cellular cordless telecommunications system according to Claim 32, **characterized in that**
the handover relevant information contains telecommunications-specific identifiers, in particular the identifiers TEI, RFPI, IPUI, B channel etc.

34. Cellular cordless telecommunications system according to one of Claims 1 to 33, **characterized in that**
the switching centre (DOVST, PABX) is designed as a digital local switching centre (DVOST) with an upstream network termination (NT).

35. Cellular cordless telecommunications system according to one of Claims 1 to 33, **characterized in that**
the switching centre (DOVST, PABX) is designed as a private branch exchange (PABX).

## Revendications

1. Système de télécommunication sans fil et cellulaire comportant
(a) une multiplicité de stations de base sans fil (A-BS, B-BS, C-BS) qui sont disposées dans des cellules radio du système de télécommunication sans fil et cellulaire et qui sont reliées à un dispositif de commutation (DOVST, PABX) par ligne pour une télécommunication au-delà de la cellule ou intercellulaire,
(a1) le dispositif de commutation (DOVST, PABX) comportant au moins une interface S₀ (NT) et
(a2) les stations de base sans fil (A-BS, B-BS, C-BS) comportant chacune des moyens (FFB, SB, DEB, MIP, PGM, ISB, AE, ZEM) pour l'établissement d'une liaison de télécommunication allant au-delà de la cellule ou intercellulaire avec un étage d'émission S₀ (SES, SE_{D}) structuré selon le modèle en couches ISO/OSI et avec un étage de réception S₀ (EMS, EE_{D}, EE_{E}) structuré selon le modèle en couches ISO/OSI, lesquels étages sont raccordés à l'interface S₀ (NT) par l'intermédiaire d'un bus S₀ comportant deux canaux B et un canal D,
(b) au moins une station mobile sans fil (MTₐ à MT_{f}) qui peut être en télécommunication avec les stations de base sans fil (A-BS, B-BS, C-BS),
caractérisé par le fait que
(c) les stations de base sans fil (A-BS, B-BS, C-BS) sont raccordées à l'interface S₀ (NT) du dispositif de commutation (DOVST, PABX) selon une configuration maître-esclave constituée d'une station de base sans fil maîtresse (A-BS) et d'au moins une station de base sans fil esclave (B-BS, C-BS),
(d) la station de base sans fil maîtresse (A-BS) et la ou les stations de base sans fil esclaves (B-BS, C-BS) sont conçues quant aux moyens (FFB, SB, DEB, MIP, PGM, ISB, AE, ZEM) de telle sorte que, après l'élaboration de la couche 1 de l'étage d'émission S₀ (SES, SE_{D}) et de l'étage de réception S₀ (EMS, EE_{D}, EE_{E}) selon le modèle en couches ISO/OSI, un message de synchronisation est transmis dans le cadre d'une communication transversale locale entre les stations de base sans fil (A-BS, B-BS, C-BS) raccordées à l'interface S₀ (NT) sur le bus S₀ de la station de base sans fil maîtresse (A-BS) à la ou aux stations de base sans fil esclaves (B-BS, C-BS).

2. Système de télécommunication sans fil et cellulaire comportant
(a) une multiplicité de stations de base sans fil (A-BS, B-BS, C-BS) qui sont disposées dans des cellules radio du système de télécommunication sans fil et cellulaire et qui sont reliées à un dispositif de commutation (DOVST, PABX) par ligne pour une télécommunication au-delà de la cellule ou intercellulaire,
(a1) le dispositif de commutation (DOVST, PABX) comportant au moins une interface S₀ (NT) et
(a2) les stations de base sans fil (A-BS, B-BS, C-BS) comportant chacune des moyens (FFB, SB, DEB, MIP, PGM, ISB, AE, ZEM) pour l'établissement d'une liaison de télécommunication allant au-delà de la cellule ou intercellulaire avec un étage d'émission S₀ (SES, SE_{D}) structuré selon le modèle en couches ISO/OSI et avec un étage de réception S₀ (EMS, EE_{D}, EE_{E}) structuré selon le modèle en couches ISO/OSI, lesquels étages sont raccordés à l'interface S₀ (NT) par l'intermédiaire d'un bus S₀ comportant deux canaux B et un canal D,
(b) au moins une station mobile sans fil (MTₐ à MT_{f}) qui peut être en télécommunication avec les stations de base sans fil (A-BS, B-BS, C-BS),
caractérisé par le fait que
(c) le dispositif de commutation (DOVST, PABX) est conçu d'une manière comparable au standard RNIS européen,
(d) les stations de base sans fil (A-BS, B-BS, C-BS) sont raccordées à l'interface S₀ (NT) du dispositif de commutation (DOVST, PABX) selon une configuration maître-esclave constituée d'une station de base sans fil maîtresse (B-BS) et d'au moins une station de base sans fil esclave (A-BS, C-BS), une première liaison radio étant établie comme liaison de télécommunication dans le cadre de la télécommunication au-delà de la cellule ou intercellulaire entre la station de base sans fil maîtresse (B-BS) et une première station mobile sans fil (MT_{c}),
(e) la première station mobile sans fil (MT_{c}) est conçue de telle sorte qu'il est établi en arrière-plan vers une deuxième station de base sans fil (A-BS) une deuxième liaison radio qui sert comme future liaison de télécommunication dans le cadre de la télécommunication allant au-delà de la cellule ou intercellulaire,
(f) le dispositif de commutation (DOVST, PABX) comporte le service "portabilité de terminaux",
(g) les moyens (FFB, SB, DEB, MIP, PGM, ISB, AE, ZEM) pour l'établissement de la liaison de télécommunication allant au-delà de la cellule ou intercellulaire ainsi que le dispositif de commutation (DOVST, PABX) sont conçus de telle sorte que, si la qualité radio de la deuxième liaison radio est supérieure ou égale à la qualité radio de la première liaison radio, en exploitant le service "portabilité de terminaux" disponible dans le dispositif de commutation (DOVST, PABX), la deuxième liaison radio sert comme nouvelle liaison de télécommunication dans le cadre de la télécommunication allant au-delà de la cellule ou intercellulaire.

3. Système de télécommunication sans fil et cellulaire comportant
(a) une multiplicité de stations de base sans fil (A-BS, B-BS, C-BS) qui sont agencées dans des cellules radio du système de télécommunication sans fil et cellulaire et qui sont reliées à un dispositif de commutation (DOVST, PABX) par ligne pour une télécommunication au-delà de la cellule ou intercellulaire,
(a1) le dispositif de commutation (DOVST, PABX) comportant au moins une interface S₀ (NT) et
(a2) les stations de base sans fil (A-BS, B-BS, C-BS) comportant chacune des moyens (FFB, SB, DEB, MIP, PGM, ISB, AE, ZEM) pour l'établissement d'une liaison de télécommunication allant au-delà de la cellule ou intercellulaire avec un étage d'émission S₀ (SES, SE_{D}) structuré selon le modèle en couches ISO/OSI et avec un étage de réception S₀ (EMS, EE_{D}, EE_{E}) structuré selon le modèle en couches ISO/OSI, lesquels étages sont raccordés à l'interface S₀ (NT) par l'intermédiaire d'un bus S₀ comportant deux canaux B et un canal D,
(b) au moins une station mobile sans fil (MTₐ à MT_{f}) qui peut être en télécommunication avec les stations de base sans fil (A-BS, B-BS, C-BS),
caractérisé par le fait que
(c) les stations de base sans fil (A-BS, B-BS, C-BS) sont raccordées à l'interface S₀ (NT) du dispcsitif de commutation (DOVST, PABX) selon une configuration maître-esclave constituée d'une station de base sans fil maîtresse (B-BS) et d'au moins une station de base sans fil esclave (A-BS, C-BS), une première liaison radio étant établie comme liaison de télécommunication dans le cadre de la télécommunication au-delà de la cellule ou intercellulaire entre la station de base sans fil maîtresse (B-BS) et une première station mobile sans fil (MT_{c}),
(d) la première station mobile sans fil (MT_{c}) est conçue de telle sorte qu'il est établi en arrière-plan vers une deuxième station de base sans fil (A-BS) une deuxième liaison radio qui sert comme future liaison de télécommunication dans le cadre de la télécommunication allant au-delà de la cellule ou intercellulaire,
(e) la station de base sans fil maîtresse (B-BS) et la ou les stations de base sans fil esclaves (A-BS, C-BS) sont conçues quant aux moyens (FFB, SB, DEB, MIP, PGM, ISB, AE, ZEM) de telle sorte qu'un message déterminant pour la commutation ou handover est transmis dans le cadre d'une communication transversale locale entre les stations de base sans fil (A-BS, B-BS, C-BS) raccordées à l'interface S₀ (NT) sur le bus S₀ de la station de base sans fil maîtresse (B-BS) à la ou aux stations de base sans fil esclaves (A-BS, C-BS).

4. Système de télécommunication sans fil et cellulaire selon la revendication 1, caractérisé par le fait que les moyens (FFB, SB, DEB, MIP, PGM, ISB, AE, ZEM) des stations de base sans fil esclaves (B-BS, C-BS) sont conçus de telle sorte que le message de synchronisation reçu est évalué et les stations de base sans fil esclaves (B-BS, C-BS) peuvent se synchroniser après cette évaluation de manière brusque ou continue avec la station de base sans fil maîtresse (A-BS).

5. Système de télécommunication sans fil et cellulaire selon la revendication 1 ou 4, caractérisé par le fait que la station de base sans fil maîtresse (A-BS) parmi les stations de base sans fil (A-BS, B-BS, C-BS) raccordées à l'interface S₀ (NT) est celle pour laquelle, après l'élaboration de la couche 1, en raison d'une demande de télécommunication intercellulaire, d'autres couches de l'étage d'émission S₀ (SES, SE_{D}) et de l'étage de réception Se (EMS, EE_{D}, EE_{E}) ont d'abord été élaborées selon le modèle en couches ISO/OSI.

6. Système de télécommunication sans fil et cellulaire selon l'une des revendications 1, 4 ou 5, caractérisé par le fait que la station de base sans fil maîtresse (A-BS) est conçue quant aux moyens (FFB, SB, DEB, MIP, PGM, ISB, AE, ZEM) de telle sorte que le message de synchronisation émis par la station de base sans fil maîtresse (A-BS) est aussi reçu et évalué par celle-ci.

7. Système de télécommunication sans fil et cellulaire selon l'une des revendications 1 ou 4 à 6, caractérisé par le fait que le message de synchronisation est transmis dans le canal D du bus S₀ et ensuite, selon une fonction d'écho mise en oeuvre dans l'interface S₀ (NT), dans un canal E.

8. Système de télécommunication sans fil et cellulaire selon l'une des revendications 1 ou 4 à 7, caractérisé par le fait que le message de synchronisation est transmis dans le canal B de bus S₀ utilisé pour la télécommunication au-delà de la cellule ou intercellulaire, des données utiles transmises dans le canal B étant remplacées de façon prédéterminée par le message de synchronisation.

9. Système de télécommunication sans fil et cellulaire selon l'une des revendications 1 ou 4 à 8, caractérisé par le fait que le message de synchronisation est transmis dans le canal D du bus S₀ sous forme de données en paquet.

10. Système de télécommunication sans fil et cellulaire selon la revendication 7, caractérisé par le fait que le message de synchronisation est contenu dans le champ de données d'une trame de données selon le protocole LAP-D.

11. Système de télécommunication sans fil et cellulaire selon la revendication 8, caractérisé par le fait que les données utiles transmises dans le canal B sont remplacées par le message de synchronisation dans la mesure où la qualité de transmission dans le canal B n'est détériorée que de façon négligeable par la détérioration du rapport signal/bruit dans le canal B.

12. Système de télécommunication sans fil et cellulaire selon la revendication 11, caractérisé par le fait que, à chaque fois, le dernier bit d'un octet MIC sur quatre des données utiles transmises dans le canal B est remplacé par le message de synchronisation.

13. Système de télécommunication sans fil et cellulaire selon la revendication 9, 11 ou 12, caractérisé par le fait que le message de synchronisation est transmis dans le canal B dans un paquet de données dont la structure est analogue à celle d'un paquet de données HDLC.

14. Système de télécommunication sans fil et cellulaire selon la revendication 8 ou 11 à 13, caractérisé par le fait que les moyens (FFB, SB, DEB, MIP, PGM, ISB, AE, ZEM) comportent un dispositif de réception (ZEM) qui est branché en parallèle avec l'étage d'émission S₀ (SES, SE_{D}) sur le bus S₀.

15. Système de télécommunication sans fil et cellulaire selon l'une des revendications 1 ou 4 à 14, caractérisé par le fait que les moyens (FFB, SB, DES, MIP, PGM, ISB, AE, ZEM) sont conçus pour la réception et l'évaluation du message de synchronisation émis de telle sorte que le message de synchronisation est détecté "en temps réel" et un signal de déclenchement est déduit du message de synchronisation.

16. Système de télécommunication sans fil et cellulaire selon l'une des revendications 1 ou 4 à 15, caractérisé par le fait que les moyens (FFB, SB, DEB, MIP, PGM, ISB, AE, ZEM) sont conçus de telle sorte que, pour chaque station de base sans fil (A-BS, B-BS, C-BS) raccordée à l'interface S₀ (NT), les opérations suivantes sont effectuées une fois ou continuellement :
(a) un premier bloc de données introduisant la transmission d'une trame de données selon le protocole LAP-D est détecté,
(b) à partir d'un deuxième bloc de données, qui suit le premier bloc de données, de la trame de données, un mot de données se rapportant au bus est produit selon une règle de production prescrite uniformément pour toutes les stations de base sans fil (A-BS, B-BS, C-BS),
(c) l'intervalle de temps, propre à chaque station de base, entre l'instant de début d'une trame temporelle radio apparaissant cycliquement dans la cellule radio pour la transmission sans fil se rapportant au canal et l'instant de la production du mot de données se rapportant au bus est détecté sous la forme d'un mot de données se rapportant à la transmission radio et propre à chaque station de base,
(d) à partir du mot de données se rapportant au bus et du mot de données se rapportant à la transmission radio et propre à chaque station de base, il est formé et mémorisé une signature de synchronisation qui est propre à chaque station de base et qui combine le timing de bus S₀ au timing radio propre à chaque station de base.

17. Système de télécommunication sans fil et cellulaire selon la revendication 16, caractérisé par le fait que la règle de production est basée sur la division polynomiale utilisée lors de la formation de valeurs CRC.

18. Système de télécommunication sans fil et cellulaire selon la revendication 16 ou 17, caractérisé par le fait que le message de synchronisation est conçu comme une signature de synchronisation de maître qui correspond à la signature de synchronisation de la station de base sans fil maîtresse (A-BS).

19. Système de télécommunication sans fil et cellulaire selon la revendication 18, caractérisé par le fait que les moyens (FFB, SB, DEB, MIP, PGM, ISB, AE, ZEM) sont conçus pour l'établissement de la liaison de télécommunication intercellulaire de telle sorte que
(a) un mot de données maître se rapportant à la transmission radio et transmis avec la signature de synchronisation de maître reçue est comparé au mot de données correspondant, se rapportant à la transmission radio, mémorisé dans la station de base sans fil esclave (B-BS, C-BS) réceptrice,
(b) lorsqu'une différence est constatée entre les mots de données à comparer, l'instant de début, indiqué par le mot de données se rapportant à la transmission radio de la station de base sans fil esclave réceptrice, de la trame temporelle radio est corrigé en fonction de la différence constatée.

20. Système de télécommunication sans fil et cellulaire selon l'une des revendications 1 ou 4 à 19, caractérisé par le fait que le dispositif de commutation (DOVST, PABX) est conçu d'une manière comparable au standard RNIS européen.

21. Système de télécommunication sans fil et cellulaire selon la revendication 20, caractérisé par le fait que
(a) les stations de base sans fil (A-BS, B-BS, C-BS) sont raccordées à l'interface S₀ (NT) du dispositif de commutation (DOVST, PABX) selon une configuration maître-esclave constituée d'une station de base sans fil maîtresse (B-BS) et d'au moins une station de base sans fil esclave (A-BS, C-BS), une première liaison radio étant établie comme liaison de télécommunication dans le cadre de la télécommunication au-delà de la cellule ou intercellulaire entre la station de base sans fil maîtresse (B-BS) et une première station mobile sans fil (MT_{c}),
(b) la première station mobile sans fil (MT_{c}) est conçue de telle sorte qu'il est établi en arrière-plan vers une deuxième station de base sans fil (A-BS) une deuxième liaison radio qui sert comme future liaison de télécommunication dans le cadre de la télécommunication allant au-delà de la cellule ou intercellulaire,
(c) le dispositif de commutation (DOVST, PABX) comporte le service "portabilité de terminaux",
(d) les moyens (FFB, SB, DEB, MIP, PGM, ISB, AE, ZEM) pour l'établissement de la liaison de télécommunication allant au-delà de la cellule ou intercellulaire ainsi que le dispositif de commutation (DOVST, PABX) sont conçus de telle sorte que, si la qualité radio de la deuxième liaison radio est supérieure ou égale à la qualité radio de la première liaison radio, en exploitant le service "portabilité de terminaux" disponible dans le dispositif de commutation (DOVST, PABX), la deuxième liaison radio sert comme nouvelle liaison de télécommunication dans le cadre de la télécommunication allant au-delà de la cellule ou intercellulaire.

22. Système de télécommunication sans fil et cellulaire selon l'une des revendications 1 ou 4 à 19, caractérisé par le fait que
(a) les stations de base sans fil (A-BS, B-BS, C-BS) sont raccordées à l'interface S₀ (NT) du dispositif de commutation (DOVST, PABX) selon une configuration maître-esclave constituée d'une station de base sans fil maîtresse (B-BS) et d'au moins une station de base sans fil esclave (A-BS, C-BS), une première liaison radio étant établie comme liaison de télécommunication dans le cadre de la télécommunication au-delà de la cellule ou intercellulaire entre la station de base sans fil maîtresse (B-BS) et une première station mobile sans fil (MT_{c}),
(b) la première station mobile sans fil (MT_{c}) est conçue de telle sorte qu'il est établi en arrière-plan vers une deuxième station de base sans fil (A-BS) une deuxième liaison radio qui sert comme future liaison de télécommunication dans le cadre de la télécommunication allant au-delà de la cellule ou intercellulaire,
(c) la station de base sans fil maîtresse (B-BS) et la ou les stations de base sans fil esclaves (A-BS, C-BS) sont conçues quant aux moyens (FFB, SB, DEB, MIP, PGM, ISB, AE, ZEM) de telle sorte qu'un message déterminant pour la commutation ou handover est transmis dans le cadre d'une communication transversale locale entre les stations de base sans fil (A-BS, B-BS, C-BS) raccordées à l'interface Se (NT) sur le bus S₀ de la station de base sans fil maîtresse (B-BS) à la ou aux stations de base sans fil esclaves (A-BS, C-BS).

23. Système de télécommunication sans fil et cellulaire selon la revendication 22, caractérisé par le fait que la station de base sans fil maîtresse (B-BS) est conçue quant aux moyens (FFB, SB, DEB, MIP, PGM, ISB, AE, ZEM) de telle sorte que le message émis par la station de base sans fil maîtresse (B-BS) est aussi reçu et évalué par celle-ci.

24. Système de télécommunication sans fil et cellulaire selon la revendication 22 ou 23, caractérisé par le fait que le message est transmis dans le canal D du bus S₀ () et ensuite, selon une fonction d'écho mise en oeuvre dans l'interface S₀ (NT), dans un canal E.

25. Système de télécommunication sans fil et cellulaire selon l'une des revendications 22 à 24, caractérisé par le fait que le message est transmis dans le canal B de bus S₀ utilisé pour la télécommunication au-delà de la cellule ou intercellulaire, des données utiles transmises dans le canal B étant remplacées de façon prédéterminée par le message.

26. Système de télécommunication sans fil et cellulaire selon l'une des revendications 22 à 25, caractérisé par le fait que le message est transmis dans le canal D du bus S₀ sous forme de données en paquet.

27. Système de télécommunication sans fil et cellulaire selon la revendication 24, caractérisé par le fait que le message est contenu dans le champ de données d'une trame de données selon le protocole LAP-D.

28. Système de télécommunication sans fil et cellulaire selon la revendication 25, caractérisé par le fait que les données utiles transmises dans le canal B sont remplacées par le message dans la mesure où la qualité de transmission dans le canal B n'est détériorée que de façon négligeable par la détérioration du rapport signal/bruit dans le canal B.

29. Système de télécommunication sans fil et cellulaire selon la revendication 28, caractérisé par le fait que, à chaque fois, le dernier bit d'un octet MIC sur quatre des données utiles transmises dans le canal B est remplacé par le message.

30. Système de télécommunication sans fil et cellulaire selon la revendication 25, 26 ou 29, caractérisé par le fait que le message est transmis dans le canal B dans un paquet de données dont la structure est analogue à celle d'un paquet de données HDLC.

31. Système de télécommunication sans fil et cellulaire selon la revendication 25 ou 28 à 30, caractérisé par le fait que les moyens (FFB, SB, DEB, MIP, PGM, ISB, AE, ZEM) comportent un dispositif de réception (ZEM) qui est branché en parallèle avec l'étage d'émission S₀ (SES, SE_{D}) sur le bus S₀.

32. Système de télécommunication sans fil et cellulaire selon l'une des revendications 22 à 31, caractérisé par le fait que les moyens (FFB, SB, DEB, MIP, PGM, ISB, AE, ZEM) sont conçus pour la réception et l'évaluation du message émis de telle sorte que des informations déterminantes pour la commutation ou handover et transmises avec le message sont détectées "en temps réel" et sont exploitées pour une commutation ou handover presque sans interruption.

33. Système de télécommunication sans fil et cellulaire selon la revendication 32, caractérisé par le fait que les informations déterminantes pour la commutation ou handover contiennent des identificateurs spécifiques de la télécommunication, notamment les identificateurs TEI, RFPI, IPUI, canal B, etc.

34. Système de télécommunication sans fil et cellulaire selon l'une des revendications 1 à 33, caractérisé par le fait que le dispositif de commutation (DOVST, PABX) est conçu comme un central de commutation numérique local (DOVST) avec une terminaison de réseau (NT) branchée du côté amont.

35. Système de télécommunication sans fil et cellulaire selon l'une des revendications 1 à 33, caractérisé par le fait que le dispositif de commutation (DOVST, PABX) est conçu comme un central de commutation privé (PABX).
